# EUROPÄISCHE PATENTSCHRIFT

(11) **EP 1 438 344 B1**
(45) Veröffentlichungstag und Bekanntmachung des Hinweises auf die Patenterteilung: **28.07.2010**
(21) Anmeldenummer: 02787498.1
(22) Anmeldetag: 23.10.2002
(51) Int. Cl.: C08G 18/08, C09D 175/04, C08G 18/66, C08G 18/42, C08G 18/44, C08G 18/12

(54) **WÄSSRIGES HOCHVERNETZTES ZWEIKOMPONENTEN-POLYURETHANBESCHICHTUNGSSYSTEM, VERFAHREN ZU SEINER HERSTELLUNG SOWIE SEINE VERWENDUNG**
AQUEOUS, HIGHLY CROSS-LINKED TWO-COMPONENT POLYURETHANE COATING SYSTEM, METHOD FOR THE PRODUCTION AND USE THEREOF
SYSTEME DE REVETEMENT DE POLYURETHANNE A DEUX COMPOSANTS, FORTEMENT RETICULE, AQUEUX, SON PROCEDE DE PRODUCTION ET SON UTILISATION

(30) Priorität: 25.10.2001 DE 10152723
(43) Veröffentlichungstag der Anmeldung: 21.07.2004
(73) Patentinhaber: Construction Research & Technology GmbH, 83308 Trostberg (DE)
(72) Erfinder: STEIDL, Norbert, 83361 Kienberg (DE); MAIER, Alois, 84549 Engelsberg (DE); WOLFERTSTETTER, Franz, 83349 Palling (DE)
(74) Vertreter: Dey, Michael
(86) Internationale Anmeldenummer: PCT/EP2002/011870
(87) Internationale Veröffentlichungsnummer: WO 2003/035710

(56) Entgegenhaltungen:
- EP-A- 0 204 938
- DE-A- 4 101 527
- DE-A- 19 619 545
- DE-A- 19 929 784

## Beschreibung

Die vorliegende Erfindung betrifft ein wässriges hochvernetztes Zweikomponenten-Polyurethan-Beschichtungssystem basierend auf einer wässrigen Lösung oder Dispersion von niedermolekularen hydroxy- und/oder aminofunktionellen Oligo- bzw. Polyurethanen als Bindemittel-Komponente und wasseremulgierbaren Polyisocyanaten als Vernetzer-Komponente, ein Verfahren zu seiner Herstellung sowie dessen Verwendung.

Die Bindemittel-Klasse der wässrigen bzw. wasserbasierenden Polyurethane ist seit über 40 Jahren bekannt. Das Eigenschaftsprofil der wasserbasierenden Polyurethane wurde in den vergangenen Jahrzehnten kontinuierlich verbessert, was durch eine Vielzahl von Veröffentlichungen zu diesem Themenkreis eindrucksvoll belegt wird. Zur Chemie und Technologie der wasserbasierenden Polyurethane sei auf D. Dieterich, K. Uhlig in Ullmann's Encyclopedia of Industrial Chemistry, Sixth Editionm 2001 Electronic Release. Wiley-VCH; D. Dieterich in Houben-Weyl, Methoden der Organischen Chemie. Bd. E20, H. Bartl, J. Falbe (Hrsg.), Georg Thieme Verlag, Stuttgart 1987, S. 1641 ff.; D. Dieterich, Prog. Org. Coat. 9 (1981) 281-330; J. W. Rosthauser, K. Nachtkamp, Journal of Coated Fabrics 16 (1986) 39-79; R. Arnoldus, Surf. Coat. 3 (Waterborne Coat.) (1990), 179-98 verwiesen.

In der Beschichtungstechnologie wurde ökologischen Aspekten in den letzten Jahren, auch im Hinblick auf die Einhaltung bestehender Emissionsrichtlinien, zunehmende Bedeutung beigemessen. Besonders vordringlich ist dabei die Reduzierung der in Beschichtungssystemen verwendeten Mengen an flüchtigen organischen Lösemitteln (VOC, volatile organic compounds).Chemisch nachvernetzende Polyurethansysteme, die aufgrund ihres hohen Eigenschaftniveaus in Beschichtungssystemen von großer Bedeutung sind, konnten bisher fast ausschließlich unter Verwendung organischer Lösemittel verarbeitet werden.

So wurde lange Zeit angenommen, dass wasserbasierende Polyurethan-Systeme nicht mit Polyisocyanaten vernetzbar wären, da diese unter Bildung von Carbaminsäure mit Wasser reagieren und in einem zweiten Reaktionsschritt unter Kohlendioxid-Abspaltung zum Amin umgesetzt werden, das mit weiterem Isocyanat zu Harnstoff abreagiert. Neben der Kohlendioxid-Bildung, die zu Reaktionsbläschen im Film führen kann, können durch die Harnstoff-Bildung Filmtrübungen auftreten.

Erst durch die Entwicklung von hydrophil modifizierten Polyisocyanaten durch Umsetzung mit Polyethylenglykolen konnte dieses Problem gelöst werden. Wegen ihrer niedrigen Viskosität kommen vornehmlich Polyisocyanate auf Basis von Hexamethylendiisocyanat (HDI) zum Einsatz. Diese hydrophil modifizierten Polyisocyanat-Härter können aufgrund ihrer selbstemulgierenden Eigenschaften in wässrige Systeme ohne großen apparativen Aufwand manuell eingearbeitet werden, was für die Applikationssicherheit und das optische Eigenschaftsniveau solcher Beschichtungssysteme von entscheidender Bedeutung ist.

Inzwischen werden aber auch wasseremulgierbare Polyisocyanate mit externer Surfactant-Technology angeboten, bei denen die hydrophilierende Gruppe nicht kovalent an das Polyisocyanat gebunden ist.

In Verbindung mit diesen wasseremulgierbaren Polyisocyanatsystemen stellen wässrige, colösemittelarme bzw. extrem VOC-reduzierte 2K-Polyurethan-Beschichtungssysteme inzwischen eine Alternative zu den entsprechenden lösemittelhaltigen Systemen dar.

Hydroxyfunktionelle wässrige Polyurethan-Dispersionen, die mit entsprechenden wasseremulgierbaren Polyisocyanaten aushärtbar sind, sind bereits seit einiger Zeit bekannt. Die damit erzielten Eigenschaften der Beschichtung insbesondere die Wasserfestigkeit sowie die Lösemittel- bzw. Chemikalienbeständigkeit, reichen aber in vielen Fällen nicht aus, denn durch die Verwendung dieser polyethylenglykol-modifizierten Polyisocyanate werden zusätzlich hydrophile Gruppen in das System eingebracht.

DE 196 19 545 offenbart wässrige Beschichtungsmittel auf PUR-Basis, die als Bindemittel eine Kombination aus A) einer in Wasser löslichen oder dispergierbaren Polyolkomponente und B) einer in Wasser löslichen oder dispergierbaren Polyisocyanatkomponente mit blockierten Isocyanatgruppen enthalten. Die Beschichtungsmittel stellen Einkomponenten-Systeme dar.

EP 0 204 938 offenbart wässrige Dispersionen von Carboxylatgruppen aufweisenden Polyurethanen aus (i) ausgewählten Polyesterdiolen, die Phthalsäure- oder Isophthalsäure-Einheiten aufweisen, (ii) ausgewählten aliphatischen und/oder cycloaliphatischen Diisocyanaten, (iii) 2,2-Bis(4-hydroxycyclohexyl)-Propan, sowie (iv) weiteren, zumindest zum Teil Carboxylatgruppen aufweisenden Aufbaukomponenten.

Aus der DE 198 47 077 A1 und der DE 198 22 890 A1 ist zwar bekannt, dass allophanatgruppenhaltige hydrophilierte Polyisocyanate verbesserte Einarbeitungseigenschaften in hydroxyfunktionelle Bindemittel aufweisen, aber die Verträglichkeit einiger Dispersionen mit manchen kommerziell erhältlichen hydrophilierten Polyisocyanat-Härtern, insbesondere in Verbindung mit bestimmten Lösemitteln, ist in vielen Fällen noch nicht ausreichend, was häufig dazu führt, dass die Härter-Komponente nur nach längerem intensiven mechanischen Rühren homogen in der wässrigen Harzkomponente verteilt werden kann oder dass unerwünschte Trübungen in der Beschichtung auftreten. Ferner ist auch das Problem der begrenzten Topfzeit und die Bildung von Reaktionsbläschen bei höheren Schichtstärken noch nicht zufriedenstellend gelöst.

Wässrige chemisch nachvernetzte 2K-Polyurethan-Beschichtungen mit freien Polyisocyanaten (Lackpolyisocyanate) als Härter-Komponente sind erstmals in der EP 0 358 979 A1 beschrieben worden. Lackpolyisocyanate sind isocyanatgruppenhaltige oligomere Derivate von Hexamethylendiisocyanat (HDI), Isophorondüsocyanat (IPDI) und/oder Bis(isocyanatocyclohexyl)methan (H₁₂MDI), welche Urethan-, Biuret-, Uretdion- und/oder Isocyanurat-Gruppen enthalten. Aufgrund ihres Molekulargewichts müssen sie aber mit nicht unerheblichen Mengen organischer Lösemittel versetzt werden, um eine für die Verarbeitung notwendige Viskosität zu erreichen.

Die EP 0 557 844 A1 beschreibt ein Verfahren zur Herstellung von wässrigen Zweikomponenten-Polyurethan-Beschichtungsmitteln auf Basis von in wässrigem Milieu unter Verwendung von externen Emulgatoren dispergiert vorliegenden Vinylpolymerpolyolen, die durch radikalische Polymerisation hergestellt wurden und in diesen Dispersionen emulgierten Polyisocyanaten.

In der EP 0 496 205 A1 werden Zweikomponenten-Bindemittelkombinationen beschrieben, die aus wasserlöslichen oderdispergierbaren Urethan-, Carboxylat- und Hydroxylgruppen enthaltenden Polyesterharzen sowie organischen Polyisocyanaten bestehen, welche in Lacken oder Beschichtungsmassen bei höheren Temperaturen (40-250 °C) ausgehärtet werden müssen.

Ein wässriges hydroxyfunktionelles Zweikomponenten-Polyurethan/Polyacrylat-Hybridsystem in Verbindung mit einem wasserdispergierbaren Polyisocyanat wird in der EP 0 742 239 A1 beschrieben.

Zweikomponenten-Polyurethanbeschichtungsmassen mit mindestens einer Reaktivkomponente, die eine Isocyanatgruppe, eine Urethan-, Thiourethan- oder Harnstoffgruppe sowie zwei verkappte mit Isocyanat reaktionsfähige Gruppen beinhalten, offenbart die DE 195 24 046 A1.

Aus der EP 0 839 846 A1 sind Zweikomponenten-PolyurethanBeschichtungsmassen bekannt, bestehend aus einer Dispersion mindestens einer Polyhydroxyverbindung als Bindemittelkomponente und mindestens einem in der Dispersion feinverteilten monomeren Diisocyanat als Härterkomponente.

Die WO 97/45475 A1 beschreibt Polyisocyanate mit einer durchschnittlichen Funktionalität von mindestens 2,0 als Härterkomponente für Zweikomponenten-Polyurethan-Systeme; gemäß der EP 0 934 963 A1 wird eine Polyisocyanatkomponente basierend auf 2-Methylpentan-1,5-diisocyanat verwendet.

Polyethermodifizierte Polyisocyanatgemische mit verbesserter Wasserdispergierbarkeit als Ausgangskomponente für die Herstellung PU-Kunststoffen oder als Vernetzerkomponente für wässrige Lackbindemittel beschreiben die DE 198 47 077 A1 und die DE 199 29 784 A1.

Spezielle Abmischungen für Zweikomponenten-Polyurethan-Korrosionsschutz-Decklacke mit hohem Festkörper-Gehalt aus bestimmten Polyasparaginsäureestern, Polyaldiminen, Polyisocyanaten und speziellen Additiven offenbart die DE 198 22 842 A1 bzw. die EP 0 959 086 A1.

Wässrige Zweikomponenten-Polyurethan- Beschichtungsmittel auf Basis von hydroxy-und/oderaminofunktionellen wasserverdünnbaren Harzen und neuartigen wasserdispergierbaren isocyanatfunktionellen Härtern für Lacke, Beschichtungen und Dichtmassen werden in der EP 0 959 115 A1 bzw. in der DE 198 22 890 A1 beansprucht.

Wasserbasierende Zweikomponenten-Polyurethan-Beschichtungssysteme, bei denen als Bindemittel-Komponente nahezu ausschließlich niedermolekulare hydroxy- und/oder aminofunktioneller Oligo- bzw. Polyurethane verwendet werden, was in Verbindung mit wasseremulgierbaren Polyisocyanat-Härtern zu hochvernetzten Systemen führt, die verbesserte Material und Applikationseigenschaften aufweisen, waren bisher jedoch nicht bekannt.

Der vorliegenden Erfindung lag daher die Aufgabe zugrunde, ein wässriges hochvernetztes Zweikomponenten-Polyurethan-Beschichtungssystem zu entwickeln, welches die genannten Nachteile des Standes der Technik nicht aufweist, sondern verbesserte Material- und Applikationseigenschaften besitzt und gleichzeitig unter Berücksichtigung ökologischer, ökonomischer und physiologischer Aspekte hergestellt werden kann.

Diese Aufgabe wurde erfindungsgemäß gelöst durch a) die Herstellung einer Bindemittel-Komponente auf Basis einer wässrigen Lösung oder Dispersion von niedermolekularen hydroxy-und/oder aminofunktionellen Oligo-bzw. Polyurethanen, wobei man
a₁) 10 bis 50 Gewichtsteile einer höhermolekularen Polyol-Komponente (A)(i) mit zwei oder mehreren gegenüber Polyisocyanaten reaktiven Hydroxyl-Gruppen und einer Molekularmasse von 500 bis 5 000 Dalton sowie 0 bis 5 Gewichtsteile einer niedermolekularen Polyol-Komponente (A)(ii) mit zwei oder mehreren gegenüber Polyisocyanaten reaktiven Hydroxyl-Gruppen und einer Molekularmasse von 50 bis 499 Dalton mit 2 bis 20 Gewichtsteilen einer Polyisocyanat-Komponente (B), bestehend aus mindestens einem Polyisocyanat, Polyisocyanat-Derivat oder Polyisocyanat-Homologen mit zwei oder mehreren aliphatischen oder aromatischen Isocyanat-Gruppen unter Zugabe von 0 bis 6 Gewichtsteilen einer Lösemittel-Komponente (C) gegebenenfalls in Gegenwart eines Katalysators teilweise oder vollständig umsetzt,
a₂) das Polyurethan-Preaddukt aus Stufe a₁) mit 0,1 bis 1,5 Gewichtsteilen einer niedermolekularen und anionisch modifizierbaren Polyol-Komponente (A)(iii) mit zwei oder mehreren gegenüber Polyisocyanaten reaktiven Hydroxyl-Gruppen und einer oder mehreren inerten Carbonsäure- und/oder SulfonsäureGruppe(n), welche mit Hilfe von Basen teilweise oder vollständig in Carboxylat- bzw. Sulfonatgruppen überführt werden können oder bereits in Form von Carboxylat- und/oder Sulfonat-Gruppen vorliegen, mit einer Molekularmasse von 100 bis 499 Dalton und: mit 0 bis 8 Gewichtsteilen einer polymeren Diolkomponente (A)(iv) mit zwei oder mehreren gegenüber Polyisocyanaten reaktiven Hydroxyl-Gruppen und weiteren gegenüber Polyisocyanaten inerten hydrophilen Gruppen mit einer Molekularmasse von 500 bis 5 000 Dalton gegebenenfalls in Gegenwart eines Katalysators umsetzt,
a₃) die freien Isocyanat-Gruppen des Polyurethan-Prepolymers aus Stufe a₂) vollständig oder teilweise mit 0,1 bis 15 Gewichtsteilen einer multifunktionellen Kettenstopper-Komponente (D) mit drei oder mehreren gegenüber Isocyanat-Gruppen reaktiven Hydroxyl- und/oder primären und/oder sekundären Amino-Gruppen und einer Molekularmasse von 50 bis 500 Dalton umsetzt, von denen eine mit dem Polyurethan-Preaddukt abreagiert,
a₄) das multifunktionelle Polyurethan-Oligomer oder -Polymer aus Stufe a₃) zur teilweisen oder vollständigen Neutralisation der Säure-Gruppen mit 0,1 bis 1 Gewichtsteilen einer Neutralisations-Komponente (E) umsetzt und anschließend
a₅) das neutralisierte Polyurethan-Oligomer oder -Polymer aus Stufe a₄) in 40 bis 60 Gewichtsteilen Wasser, welches noch 0 bis 50 Gewichtsteile einer Formulierungskomponente (F) enthält, dispergiert
a₆) gegebenenfalls das nur teilweise kettengestoppte Polyurethan-Oligomer oder -Polymer aus Stufe a₅) noch mit 0 bis 15 Gewichtsteilen einer Kettenverlängerungs-Komponente (G) mit zwei oder mehreren gegenüber Isocyanat-Gruppen reaktiven primären und/oder sekundären Amino-Gruppen und einer Molekularmasse von 50 bis 500 Dalton umsetzt
   sowie
b) durch die anschließende Umsetzung der Bindemittel-Komponente aus Stufe a₅) oder Stufe a₆) mit einer Vernetzer-Komponente (H) im Verhältnis 3 : 1 bis 5 : 1, wobei als Vernetzer-Komponente (H) wasserdispergierbare Polyisocyanate mit aliphatisch und/oder cycloaliphatisch und/oder aromatisch gebundenen Isocyanat-Gruppen eingesetzt werden, welche 0 bis 20 Gewichtsteile eines organischen Lösemittels enthalten können.

Überraschenderweise wurde gefunden, dass die im Oligo- oder Polyurethan-Polymer enthaltenen Hydroxyl-Gruppen- und/oder Amino-Gruppen zunächst zu einer nichtionischen Hydrophilierung der Bindemittel-Komponente erheblich beitragen, wodurch eine Verringerung der anionischen Hydrophilierung mit Salzgruppen von gewöhnlich 40 bis 50 meq/(100g) Festharz auf 10 bis 20 meq/(100g) ermöglicht wird. Bei der anschließenden Vernetzung reagieren die Hydroxyl- und/oder Amino-Gruppen mit den Isocyanat-Gruppen der Vernetzer-Komponente ab. Bei der Verarbeitung des Zweikomponentensystems nimmt die Zahl der nichtionisch hydrophilierenden Gruppen stetig ab. Das resultierende Polyurethan-Polymer besitzt daher nur einen sehr geringen Anteil an anionischen Gruppen, was zu einer signifikant verringerten Hydrophilie der fertigen Beschichtung führt. Die Herabsetzung der Stabilisierung des Bindemittels im Rahmen der Verarbeitung hat keinen sichtbaren Einfluß auf die Topfzeit.Die Vernetzungsdichte kann über die Anzahl der in der Bindemittel-Komponente enthaltenen Hydroxyl- und/oder Amino-Gruppen und über die Wahl der Vernetzer-Komponente beliebig eingestellt werden. Hohe Vernetzungsdichten führen zu Beschichtungen mit stark verbesserter Chemikalienbeständigkeit. Bedingt durch das Herstellungsverfahren und die niedrige Molekularmasse der Bindemittel-Komponente können zudem stark hydrophobe polymere Polyole als Polyurethane Backbones eingesetzt werden, ohne dass grössere Mengen an organischen Lösemitteln zur Verringerung der Viskosität erforderlich sind.

Es hat sich überraschernderweise auch gezeigt, dass sich die Vernetzer-Komponente - insbesondere Polyisocyanate ohne permanente hydrophile Modizierung - sehr leicht durch einfache Emulgiertechniken, beispielsweise durch Verwendung eines mechanischen Rührwerkes oder durch einfaches Mischen der beiden Komponenten per Hand, in die Bindemittel-Komponente einarbeiten lässt, wodurch eine feine homogene Verteilung der Polyisocyanat-Tröpfchen in der Bindemittel-Komponente gewährleistet ist.

Das erfindungsgemäße wässrige hochvernetzte Zweikomponenten-Polyurethan-Beschichtungssystem ist definiert durch sein mehrstufiges Herstellungsverfahren. In der Reaktionstufe a) wird zunächst eine lösemittelfreie oder lösemittelarme Bindemittel-Komponente auf Basis einer wässrigen Lösung oder Dispersion von niedermolekularen hydroxy- und/oder aminofunktionellen Oligo- oder Polyurethanen hergestellt, die in der Reaktionstufe b) dann mit einer Vernetzer-Komponente auf Basis wasserdispergierbarer Polyisocyanate weiter zu einem wässrigen hochvernetzten Zweikomponenten-Polyurethan-Beschichtungssystem umgesetzt wird.

Die Herstellung der Bindemittel-Komponente erfolgt mit Hilfe eines modifizierten Prepolymer Mixing Process, dem sog. High Solids Process (HSP Technology). Hohe Scherkräfte sind dabei nicht erforderlich, so das z.B. schnelllaufende Rührer, Dissolver oder Rotor/Stator-Mischer verwendet werden können.

Zur Durchführung dieses Verfahrens werden unter Anwendung der in der Polyurethan-Chemie üblichen Techniken in der Reaktionsstufe a₁) 10 bis 50 Gewichtsteile einer höhermolekularen Polyol-Komponente (A) (i) sowie 0 bis 5 Gewichtsteile einer niedermolekularen Polyol-Komponente (A)(ii) mit 2 bis 20 Gewichtsteilen einer Polyisocyanat-Komponente (B) unter Zugabe von 0 bis 6 Gewichtsteilen einer Lösemittel-Komponente (C) ggf. in Gegenwart eines Katalysators teilweise oder vollständig zur Reaktion gebracht, wobei die Hydroxyl-Gruppen der Komponenten (A)(i) und (A)(ii) teilweise oder vollständig mit den Isocyanat-Gruppen der Komponente (B) umgesetzt werden.

Die Herstellung des Polyurethan-Preaddukts gemäss Reaktionsstufe a₁) erfolgt vorzugsweise in der Weise, dass die Komponente (B) innerhalb eines Zeitraumes von einigen Minuten bis zu einigen Stunden dem Gemisch aus den Komponenten(A)(i), (A)(ii) und (C) zugesetzt bzw. zudosiert wird oder alternativ dazu das Gemisch aus den Komponenten (A)(i), (A)(ii) und (C) innerhalb eines Zeitraumes von einigen Minuten bis zu einigen Stunden der Komponente (B) zugesetzt bzw. zudosiert wird. Zur Verringerung der Viskosität kann in der Reaktionsstufe a₁) eine Lösemittel-Komponente (C) in geringen Mengen eingesetzt werden.

Die Polyol-Komponente (A)(i) besteht aus einem höhermolekularen Polyol mit zwei oder mehreren gegenüber Polyisocyanaten reaktiven Hydroxyl-Gruppen mit einer mittleren Molekularmasse (Zahlenmittel) von 500 bis 6 000 Dalton. Als geeignete polymere Polyole können Polyalkylenglykole, aliphatische oder aromatische Polyester, Polycaprolactone, Polycarbonate, α,ω-Polymethacrylatdiole, α,ω-Dihydroxyalkylpolydimethylsiloxane, hydroxyfunktionelleMakromonomere, hydroxyfunktionelle Telechele, hydroxyfunktionelle Epoxid-Harze mit einer Molekularmasse von 1000 bis 3000 Dalton oder geeignete Gemische daraus eingesetzt werden.

Geeignete Polyalkylenglykole sind beispielsweise Polypropylenglykole, Polytetramethylenglykole bzw. Polytetrahydrofurane, hydrophob modifizierte Polyetherpolymere bestehend aus verseifungsstabilen Blockcopolymeren mit ABA-, BAB- oder (AB)ₙ-Struktur, wobei A ein Polymer-Segment mit hydrophobierenden Eigenschaften und B ein Polymer-Segment auf Basis Polypropylenoxid repräsentiert, hydrophob modifizierte Polyetherpolyole bestehend aus verseifungsstabilen Blockcopolymeren mit A₁A₂A₃- oder (A₁A₂)ₙ-Struktur, wobei A jeweils Polymer-Segmente mit hydrophobierenden Eigenschaften repräsentiert, hydrophob modifizierte statistische Polyetherpolyole bestehend aus verseifungsstabilen statistischen Copolymeren aus mindestens einem hydrophoben Alkylenoxid und Propylenoxid.

Bevorzugt werden lineare bzw. difunktionelle hydrophob modifizierte Polyetherpolymere bestehend aus verseifungsstabilen Blockcopolymeren mit ABA-, BAB- oder (AB)ₙ-Struktur, wobei A ein Polymer-Segment mit hydrophobierenden Eigenschaften und B ein Polymer-Segment auf Basis Polypropylenoxid darstellt, mit einer mittleren Molekularmasse (Zahlenmittel) von 1 000 bis 3 000 Dalton eingesetzt.

Geeignete aliphatische oder aromatische Polyester sind beispielsweise Kondensate auf Basis von 1,2-Ethandiol bzw. Ethylenglykol und/oder 1,4-Butandiol bzw. 1,4-Butylenglykol und/oder 1,6-Hexandiol bzw. 1,6-Hexamethylenglykol und/oder 2,2-Dimethyl-1,3-propandiol bzw. Neopentylglykol und/oder 2-Ethyl-2-hydroxymethyl-1,3-propandiol bzw. Trimethylolpropan sowie 1,6-Hexandisäure bzw. Adipinsäure und/oder 1,2-Benzoldicarbonsäure bzw. Phthalsäure und/oder 1,3-Benzoldicarbonsäure bzw. Isophthalsäure und/oder 1,4-Benzoldicarbonsäure bzw. Terephthalsäure und/oder 5-Sulfoisophthalsäure-Natrium bzw. deren Ester sowie Umsetzungsprodukte aus Epoxiden und Fettsäuren. Bevorzugt werden lineare bzw. difunktionelle aliphatische oder aromatische PolyesterPolyole mit einer mittleren Molekularmasse (Zahlenmittel) von 1 000 bis 3 000 Dalton eingesetzt.

Polycaprolactone auf Basis von ε-Caprolacton (CAPA-Typen, Fa. Solvay Interox Ltd.), Polycarbonate auf Basis von Dialkylcarbonaten und Glykolen (Desmophen 2020, Fa. Bayer AG) und Kombinationen (Desmophen C 200, Fa. Bayer AG) daraus gehören ebenfalls zur Gruppe der Polyester. Bevorzugt werden lineare bzw. difunktionelle Typen mit einer mittleren Molekularmasse (Zahlenmittel) von 1 000 bis 3 000 Dalton eingesetzt.

Als α,ω-Polymethacrylatdiole (TEGO^{®} Diol BD 1000, TEGO^{®} Diol MD 1000 N, TEGO^{®} Diol MD 1000 X, Fa. Tego Chemie Service GmbH) und α,ω-Dihydroxyalkylpolydimethylsiloxane werden bevorzugt lineare bzw. difunktionelle Typen mit einer mittleren Molekularmasse (Zahlenmittel) von 1000 bis 3 000 Dalton eingesetzt.

Die Komponente (A)(ii) besteht aus einem niedermolekularen Polyol mit zwei oder mehreren gegenüber Polyisocyanaten reaktiven Hydroxyl-Gruppen mit einer mittleren Molekularmasse von 50 bis 499 Dalton. Als geeignete niedermolekulare Polyole können beispielsweise 1,2-Ethandiol bzw. Ethylenglykol, 1,2-Propandiol bzw. 1 ,2-Propylenglykol, 1,3-Propandiol bzw. 1,3-Propylenglykol, 1,4-Butandiol bzw. 1,4-Butylenglykol, 1,6-Hexandiol bzw. 1,6-Hexamethylenglykol, 2-Methyl-1,3-propandiol, 2,2-Dimethyl-1,3-propandiol bzw. Neopentylglykol, 1,4-Bis-(hydroxymethyl)-cyclohexan bzw. Cyclohexandimethanol, 1,2,3-Propantriol bzw. Glycerol, 2-Hydroxymethyl-2-methyl-1,3-propanol bzw. Trimethylolethan, 2-Ethyl-2-hydroxymethyl-1,3-propandiol bzw. Trimethylolpropan, 2,2-Bis-(hydroxymethyl)-1,3-propandiol bzw. Pentaerythrit eingesetzt werden. Bevorzugt wird 1,4-Butandiol eingesetzt.

Die Polyisocyanat-Komponente (B) besteht aus mindestens einem Polyisocyanat, Polyisocyanat-Derivat oder Polyisocyanat-Homologen mit zwei oder mehreren aliphatischen oder aromatischen Isocyanat-Gruppen. Geeignet sind insbesondere die in der Polyurethan-Chemie hinreichend bekannten Polyisocyanate oder Kombinationen daraus. Als geeignete aliphatische Polyisocyanate können beispielsweise 1,6-Diisocyanatohexan (HDI), 1-Isocyanato-5-isocyanatomethyl-3,3,5-trimethyl-cyclohexan bzw. Isophorondiisocyanat (IPDI), Bis-(4-isocyanatocyclo-hexyl)-methan (H₁₂MDI), 1,3-Bis-(1-isocyanato-1-methyl-ethyl)-benzol (m-TMXDI) bzw. technische Isomeren-Gemische der einzelnen aromatischen Polyisocyanate eingesetzt werden. Als geeignete aromatische Polyisocyanate können beispielsweise 2,4-Diisocyanattoluol bzw. Toluoldiisocyanat (TDI), Bis-(4-isocyanatophenyl)-methan (MDI) und ggf. dessen höhere Homologe (Polymeric MDI) bzw. technische Isomeren-Gemische der einzelnen aromatischen Polyisocyanate eingesetzt werden. Weiterhin sind auch die sogenannten "Lackpolyisocyanate" auf Basis von Bis-(4-isocyanatocyclohexyl)-methan (H₁₂MDI), 1,6-Diisocyanatohexan (HDI), 1-Isocyanato-5-isocyanatomethyl-3,3,5-trimethyl-cyclohexan(IPDI) grundsätzlichgeeignet. Der Begriff "Lackpolyisocyanate" kennzeichnet Allophanat-, Biuret-, Carbodiimid-, Isocyanurat-, Uretdion-, Urethan-Gruppen aufweisende Derivate dieser Diisocyanate, bei denen der Rest-Gehalt an monomeren Diisocyanaten dem Stand der Technik entsprechend auf ein Minimum reduziert wurde. Daneben können auch noch modifizierte Polyisocyanate eingesetzt werden, die beispielsweise durch hydrophile Modifizierung von "Lackpolyisocyanaten" auf Basis von 1,6-Diisocyanatohexan (HDI) zugänglich sind. Die aliphatischen Polyisocyanate sind gegenüber den aromatischen Polyisocyanaten zu bevorzugen. Weiterhin werden Polyisocyanate mit Isocyanat-Gruppen unterschiedlicher Reaktivität bevorzugt.

Das NCO/OH-Equivalentverhältnis der Komponenten (A) und (B) wird auf einen Wert von 1,25 bis 2,5, vorzugsweise 1,5 bis 2,25 eingestellt.

Vorzugsweise werden Polyisocyanate mit Isocyanat-Gruppen unterschiedlicher Reaktivität eingesetzt, um engere Molekularmassen-Verteilungen mit geringerer Uneinheitlichkeit zu erhalten. Dementsprechend werden Polyurethan-Prepolymere mit linearer Struktur bevorzugt, die sich aus difunktionellen Polyol- und Polyisocyanat-Komponenten zusammensetzen. Die Viskosität der Polyurethan-Prepolymere ist relativ niedrig und weitgehend unabhängig von der Struktur der verwendeten Polyol- und Polyisocyanat-Komponenten.

Die Lösemittel-Komponente (C) besteht aus mindestens einem gegenüber Polyisocyanaten inerten und vorzugsweise mit Wasser ganz oder teilweise mischbaren Solvens, das nach der Herstellung in der Bindemittel-Komponente verbleibt oder durch Destillation ganz oder teilweise entfernt wird. Geeignete Solventien sind beispielsweise hochsiedende und hydrophile organische Lösemittel wie N-Methylpyrrolidon, Diethylenglykoldimethylether, Dipropylenglykoldimethylether (Proglyde DMM^{®} der Fa. Dow), niedrigsiedende Lösemittel wie Aceton, Butanon oder beliebige Gemische daraus. Bevorzugt wird ein hochsiedendes und hydrophiles Lösemittel wie N-Methylpyrrolidon eingesetzt, das nach der Herstellung in der Dispersion verbleibt und als Koaleszenzhilfsmittel fungiert.

In der nachfolgenden Reaktionssstufe a₂) wird das teilweise oder vollständig abreagierte Polyurethan-Preaddukt aus Stufe a₁) mit 0,1 bis 1,5 Gewichtsteile einer niedermolekularen und anionisch modifizierbaren Polyol-Komponente (A) (iii) und/oder mit 0 bis 8 Gewichtsteilen einer polymeren Diolkomponente (A)(iv) ggf. in Gegenwart eines Katalysators zum entsprechenden Polyurethan-Prepolymer zur Reaktion gebracht.

Die Herstellung des Polyurethan-Prepolymers gemäss Reaktionsstufe a₂) erfolgt vorzugsweise in der Weise, dass die feingemahlene Polyol-Komponente (A)(iii) mit einer mittleren Teilchengröße < 150 µm und die polymere Diolkomponente (A)(iv) innerhalb eines Zeitraumes von einigen Minuten bis zu einigen Stunden dem Polyurethan-Preaddukt aus Stufe a₁) zugesetzt bzw. zudosiert werden. Das in Reaktionstufe a₂) eingesetzte Polyurethan-Preaddukt aus Stufe a₁) kann bei entsprechender Prozessführung bzw. unvollständiger Umsetzung neben Isocyanat-Gruppen und/oder Polyisocyanat-Monomeren ggf. auch noch freie Hydroxyl-Gruppen aufweisen.

Die Komponente (A) (iii) besteht aus mindestens einem niedermolekularen und anionisch modifizierbaren Polyol mit einer oder mehreren gegenüber Polyisocyanaten reaktiven Hydroxyl-Gruppen und einer oder mehreren gegenüber Polyisocyanaten inerten Carbonsäure und/oder SulfonsäureGruppe(n), die in Gegenwart von Basen ganz oder teilweise in Carboxylat- und/oder Sulfonat-Gruppen überführt werden können oder bereits in Form von Carboxylat- und/oder Sulfonat-Gruppen vorliegen und einer Molekularmase von 100 bis 499 Dalton. Als niedermolekulare und anionisch modifizierbare Polyole können beispielsweise Hydroxypivalinsäure (Handelsname HPA, Fa. Perstorp Specialty Chemicals AB), 2-Hydroxymethyl-3-hydroxypropansäure bzw. Dimethylolessigsäure, 2-. Hydroxymethyl-2-methyl-3-hydroxypropansäure bzw. Dimethylolpropionsäure (Handelsname Bis-MPA, Fa. Perstorp Specialty Chemicals AB), 2-Hydroxymethyl-2-ethyl-3-hydroxypropansäure bzw. Dimethylolbuttersäure, 2-Hydroxymethyl-2-propyl-3-hydroxypropansäure bzw. Dimethylolvaleriansäure, Citronensäure, Weinsäure, [Tris-(hydroxymethyl)-methyl]-3-aminopropansulfonsäure (TAPS, Fa. Raschig GmbH), Building Blocks auf Basis von 1,3-Propansulfon (Fa. Raschig GmbH) und/oder 3-Mercaptopropansulfonsäure, Natrium-Salz (Handelsname MPS, Fa. Raschig GmbH) eingesetzt werden. Diese Building Blocks können gegebenenfalls auch Amino-Gruppen anstelle von Hydroxyl-Gruppen aufweisen. Bevorzugt werden Bishydroxyalkancarbonsäuren und/oder Bishydroxysulfonsäuren bzw. deren Alkalisalze mit einer Molekularmasse von 100 bis 499 Dalton eingesetzt und insbesondere 2-Hydroxymethyl-2-methyl-3-hydroxypropansäure bzw. Dimethylolpropionsäure (Handelsname DMPA^{®} der Fa. Trimet Technical Products, Inc.).

Die Komponente (A) (iv) besteht aus 0 bis 8 Gewichtsteilen einer polymeren Diolkomponente mit zwei oder mehreren gegenüber Polyisocyanaten reaktiven Hydroxyl-Gruppen und weiteren gegenüber Polyisocyanaten inerten hydrophilen Gruppen mit einer Molekularmasse von 500 bis 5 000 Dalton. Bevorzugt werden Umsetzungsprodukte aus Poly-(ethylenoxid[*co*/*block*/*ran*-propylenoxid])-monoalkylethern, einem Diisocyanat und Diethanolamin eingesetzt.

Die Durchführung der Reaktionsstufen a₁) und a₂) ist im Hinblick auf die Reaktionsbedingungen relativ unkritisch. Der Reaktionsansatz wird in den Reaktionsstufen a₁) und a₂) unter Ausnutzung der Exothermie der Polyadditions-Reaktion bis zum Erreichen des berechneten bzw. theoretischen NCO-Gehaltes vorzugsweise bei 60 bis 120 °C, insbesondere bei 80 bis 100 ° C, unter Inertgas-Atmosphäre gerührt. Die erforderlichen Reaktionszeiten liegen im Bereich von einigen Stunden und werden durch Reaktions-Parameter wie die Reaktivität der Komponenten, die Stöchiometrie der Komponenten und die Temperatur massgebend beeinflusst.

Die Umsetzung der Komponenten (A) und (B) in den Reaktionsstufen a₁) und/oder a₂) kann in Gegenwart eines für Polyadditions-Reaktionen an Polyisocyanaten üblichen Katalysators erfolgen. Bei Bedarf erfolgt ein Zusatz dieser Katalysatoren in Mengen von 0,01 bis 1 Gew.-% bezogen auf die Komponenten (A) und (B). Gebräuchliche Katalysatoren für Polyadditions-Reaktionen an Polyisocyanate sind bspw. Dibutylzinnoxid, Dibutylzinndilaurat (DBTL), Triethylamin, Zinn(II)-octoat, 1,4-Diazabicyclo[2,2,2]octan (DABCO), 1,4-Diaza-bicyclo[3,2,0]-5-nonen (DBN), 1,5-Diaza-bicyclo[5,4,0]-7-undecen (DBU).

Das anionisch modifizierbare Polyurethan-Prepolymer aus Reaktionsstufe a₂) wird in der nachfolgenden Reaktionsstufe a₃) vollständig oder teilweise mit 0,1 bis 15 Gewichtsteilen einer multifunktionellen Kettenstopper-Komponente (D) zur Reaktion gebracht, wobei jeweils nur eine reaktive Gruppe oder Komponente (D) mit einer Isocyanat-Gruppe des Polyurethan-Preaddukts abreagiert. Die Reaktions-Stufe a₃) wird vorzugsweise bei einer Temperatur von 60 bis 120 °C, insbesondere bei 80 bis 100 °C durchgeführt.

Die Kettenstopper-Komponente (D) besteht aus einem Polyol, Polyamin oder Polyaminoalkohol mit drei oder mehreren gegenüber Isocyanat-Gruppen reaktiven Hydroxyl- und/oder primären und/oder sekundären Amino-Gruppen und einer Molekularmasse von 50 bis 500 Dalton, von denen eine mit dem Polyurethan-Preaddukt abreagiert. Als geeignete Kettenstopper-Komponente (D) können beispielsweise Diethanolamin, Trimethylolpropan, Ditrimethylolpropan, Pentaerythrit, Dipentaerythryt, Kohlenhydrate und/oder deren Derivate eingesetzt werden. Bevorzugt werden aliphatische oder cycloaliphatische Polyole und/oder Polyamine und/oder Aminoalkohole eingesetzt und insbesondere Diethanolamin, und/oder Trimethylolpropan.

Die Kettenstopper-Komponente (D) wird in einer solchen Menge zugegeben, daß der Kettenstoppungsgrad bezogen auf die freien Isocyanat-Gruppen des Polyurethan-Prepolymers aus den Komponenten (A) und (B) bei 80 bis 100 Equivalent-%, liegt.

Das funktionalisierte und anionisch modifizierbare Polyurethan-Oligomer oder -Polymer aus Reaktionsstufe a₃), das zwei oder mehrere reaktive Gruppen pro Kettenende und eine Gesamtfunktionalität ≥ 4 aufweist, wird in der nachfolgenden Reaktionsstufe a₄) mit 2 bis 20 Gewichtsteilen einer Neutralisations-Komponente (E) zur teilweisen oder vollständigen Neutralisation der Carbonsäure-und/oder Sulfonsäure-Gruppen zur Reaktion gebracht (direkte Neutralisation). Die Reaktions-Stufe a₄) wird vorzugsweise bei einer Temperatur von 40 bis 65 °C, insbesondere bei ca. 50 °C, durchgeführt.

Die Neutralisations-Komponente (E) besteht aus einer oder mehreren Basen, die zur teilweisen oder vollständigen Neutralisation der Carbonsäure- und/oder Sulfonsäure-Gruppen dienen. Sofern die Komponente (A)(iii) bereits in Form ihrer Salze vorliegt, kann auf die Neutralisations-Komponente (E) verzichtet werden. Als geeignete Basen können beispielsweise tertiäre Amine wie N,N-Dimethylethanolamin, N-Methyldiethanolamin, Triethanolamin, N,N-Dimethylisopropanolamin, N-Methyldiisopropanolamin, Triisopropylamin, N-Methylmorpholin, N-Ethylmorpholin, Triethylamin, Ammoniak oder Alkalihydroxide wie Lithiumhydroxid, Natriumhydroxid, Kaliumhydroxid eingesetzt werden. Bevorzugt werden tertiäre Amine und insbesondere Triethylamin eingesetzt.

Die Neutralisations-Komponente (E) wird in einer solchen Menge zugegeben, dass der Neutralisations-Grad bezogen auf die freien Carbonsäure- und/oder Sulfonsäure-Gruppen des Polyurethan-Oligomers oder -Polymers aus den Komponenten (A), (B) und (D) bei 70 bis 100 Equivalent-%, vorzugsweise bei 80 bis 90 Equivalent-%, liegt. Bei der Neutralisation werden aus den Carbonsäure- und/oder Sulfonsäure-Gruppen Carboxylat- und/oder Sulfonat-Gruppen gebildet, die zur anionischen Modifizierung bzw. Stabilisierung der Polyurethan-Dispersion dienen.

Das funktionalisierte und anionisch modifizierte Polyurethan-Oligomer oder-Polymer aus Reaktionsstufe a₄) wird in der nachfolgenden Reaktionsstufe a₅) in 40 bis 60 Gew.-Teilen Wasser, welches noch 0 bis 50 Gew.-Teile einer Formulierungs-Komponente (F) enthalten kann (*in-situ* Formulierung), dispergiert. Die Reaktions-Stufe a₅) wird vorzugsweise bei einer Temperatur von 30 bis 50 ° C, insbesondere bei ca. 40 °C, durchgeführt. Bei Bedarf kann das Wasser, welches noch die Formulierungs-Komponente (F) enthalten kann, auch in das multifunktionelle und anionisch modifizierte Polyurethan-Oligomer oder -Polymer dispergiert werden.

Die Reaktionsstufen a₄) und a₅) können auch so zusammengefasst werden, dass die Komponente (E) dem Wasser vor dem Dispergieren zugesetzt wird (indirekte Neutralisation). Bei Bedarf kann auch eine Kombination aus direkter und indirekter Neutralisation angewendet werden.

Bei der Dispergierung wird das Polyurethan-Prepolymer in das Dispergier-Medium überführt und bildet dabei eine wässrige Lösung oder Dispersion von niedermolekularen hydroxy- und/oder aminofunktionellen Oligo- oder Polyurethanen aus. Das anionisch modifizierte Polyurethan-Oligomer oder - Polymer bildet dabei entweder Micellen, die an der Oberfläche stabilisierende Carboxylat- und/oder Sulfonat-Gruppen und im Inneren reaktive Isocyanat-Gruppen aufweisen oder liegt gelöst in der wässrigen Phase vor. Alle kationischen Gegen-Ionen zu den anionischen Carboxylat- und/oder Sulfonat-Gruppen sind im Dispergier-Medium gelöst. Die Begriffe "Dispergierung" bzw. "Dispersion" beinhalten, daß neben dispergierten Komponenten mit micellarer Struktur auch solvatisierte und/oder suspendierte Komponenten enthalten sein können.

Der Härtegrad des verwendeten Wassers ist für das Verfahren unerheblich, die Verwendung von destilliertem oder entsalztem Wasser ist daher nicht erforderlich. Hohe Härtegrade bewirken eine weitere Verringerung der Wasseraufnahme der wässrigen hochvernetzten Zweikomponenten-Polyurethan-Beschichtungssytems, ohne deren Material-Eigenschaften negativ zu beinflussen.

Die Formulierungs-Komponente (F) besteht aus Entschäumern, Entlüftern, Gleit- und Verlaufadditiven, strahlenhärtende Additiven, Dispergieradditiven, Substratnetzadditiven, Hydrophobierungsmitteln, Rheologieadditiven wie Polyurethan-Verdicker, Koaleszenzhilfsmitteln, Mattierungsmitteln, Haftvermittlern, Frostschutzmitteln, Antioxidantien, UV-Stabilisatoren, Bakteriziden, Fungiziden, weiteren Polymeren und/oder Polymer-Dispersionen sowie Füllstoffen, Pigmenten, Mattierungsmitteln oder geeignete Kombination daraus. Die einzelnen Formulierungs-Bestandteile sind dabei als inert zu betrachten.

Das gegebenenfalls nur teilweise kettengestoppte funktionalisierte und anionisch modifizierte Polyurethan-Oligomer oder-Polymer aus Reaktonsstufe a₅) wird in der anschließenden Reaktionsstufe a₆) mit 0 bis 15 Gewichtsteilen einer Kettenverlängerungs-Komponente (G) zur Reaktion gebracht. Die Reaktionsstufe a₆) wird vorzugsweise bei einer Temperatur von 30 bis 50 °C, insbesondere bei ca. 40 °C, durchgeführt.

Die Reaktionsstufen a₅) und a₆) können auch so zusammengefasst werden, dass die Komponente (G) dem Wasser vor dem Dispergieren zugesetzt wird.

Die Kettenverlängerungs-Komponente (G) besteht aus einem Polyamin mit zwei oder mehreren gegenüber Polyisocyanaten reaktiven Amino-Gruppen. Als geeignete Polyamine können beispielsweise Adipinsäuredihydrazid, Ethylendiamin, Diethylentriamin, Triethylentetramin, Tetraethylenpentamin, Pentaethylenhexamin, Dipropylentriamin, Hexamethylendiamin, Hydrazin, Isophorondiamin, N-(2-Aminoethyl)-2-aminoethanol, Addukte aus Salzen der 2-Acrylamido-2-methylpropan-1-sulfonsäure (AMPS^{®}) und Ethylendiamin, Addukte aus Salzen der (Meth)acrylsäure und Ethylendiamin, Addukte aus 1,3-Propansulfon und Ethylendiamin oder beliebige Kombination dieser Polyamine. Bevorzugt werden difunktionelle primäre Amine und insbesondere Ethylendiamin eingesetzt.

Die Kettenverlängerungs-Komponente (G) wird in einer solchen Menge zugegeben, daß der Kettenverlängerungsgrad bezogen auf die freien Isocyanat-Gruppen des Polyurethan-Oligomers oder -Polymers aus den Komponenten (A), (B), (D) und (E) bei 0 bis 20 Equivalent-% liegt. Die Kettenverlängerungs-Komponente (G) kann in vorab entnommenen Anteilen des Wassers im Gewichtsverhältnis 1 : 1 bis 1 : 10 verdünnt werden, um die zusätzliche Exothermie durch die Hydratisierung der Amine zurückzudrängen.

Die (partielle) Kettenverlängerung führt zur Erhöhung der Molekularmasse des Polyurethan-Oligomers bzw. -Polymers. Die Kettenverlängerungs-Komponente (E) reagiert dabei mit reaktiven Isocyanat-Gruppen wesentlich rascher als Wasser. Im Anschluß an die Reaktions-Stufe a₆) werden evtl. noch vorhandene freie Isocyanat-Gruppen mit Wasser vollständig kettenverlängert.

Der Festkörper-Gehalt an Polyurethan-Oligomer oder -Polymer bestehend aus den Komponenten (A), (B), (D), (E) und (G) wird auf 35 bis 70 Gew.-%, vorzugsweise 45 bis 55 Gew.-% bezogen auf die Gesamtmenge der wässrigen Bindemittel-Komponente bestehend aus den Komponenten (A) bis (E) und (G) eingestellt.

Die mittlere Partikelgröße der Mizellen der wässrigen Bindemittel-Komponente bestehend aus den Komponenten (A) bis (E) und (G) beträgt 10 bis 300 nm, vorzugsweise 50 bis 200 nm.

Die mittlere Molekularmasse des Polyurethan-Oligomers oder -Polymers bestehend aus den Komponenten (A), (B), (D), (E) und (G) beträgt 1000 bis 20 000 Dalton, vorzugsweise 2000 bis 15000 Dalton.

Der Gehalt an Carboxylat- und/oder Sulfonat-Gruppen des Polyurethan-Oligomers oder -Polymers bestehend aus den Komponenten (A), (B), (D), (E) und (G) wird auf 5 bis 25 meq·(100 g)⁻¹, vorzugsweise auf 10 bis 20 meq·(100g)⁻¹ eingestellt.

Die Bindemittelkomponente liegt in Form einer Dispersion oder molekulardisperser Lösung niedermolekularer hydroxy- und/oder aminofunktioneller Oligo- bzw. Polyurethane vor, die mit Wasser verdünnbar sind und in einem pH-Bereich von 6 bis 9 liegen. Sie können ggf. noch weitere wasserverdünnbare organische Polyhydroxyverbindungen wie wasserlösliche Alkohole mit mehr als zwei Hydroxylgruppen, wie z. B. Glycerin, Trimethylolpropan, 1,2,3-Butantriol, 1,2,6-Hexantriol, Pentaerythrit oder Zucker enthalten, wodurch die lacktechnischen Eigenschaften der ausgehärteten Beschichtung entsprechend modifiziert werden können.

Die Stabilisierung dieser Dispersionen oder Lösungen erfolgt durch die Anwesenheit von ionisch hydrophilen Gruppen, wie z.B. Carboxylat-, Sulfonat-, oder anderen hydrophilen Gruppen, die durch vollständige oder teilweise Neutralisation der entsprechenden Säure-Gruppen erhalten werden.

Die Bindemittel-Komponente aus Reaktionsstufe a₅) oder a₆) wird schließlich in der Reaktionsstufe b) mit der ggf. hydrophil modifizierten Vernetzer-Komponente (H) im Verhältnis 3 : 1 bis 5 : 1 zur Reaktion gebracht, wobei die Vernetzer-Komponente (H) zur Bindemittel-Komponente gegeben wird und man nach der Applikation ein hochvernetztes Polyurethan-Beschichtungssystem mit verringerter Hydrophilie und verbesserter Chemikalienbeständigkeit erhält. Die Reaktionsstufe b) wird vorzugsweise bei einer Temperatur von 20 bis 40 °C, insbesondere bei ca. 20 °C, durchgeführt.

Die Vernetzer-Komponente (H) besteht aus wasserdispergierbaren Polyisocyanaten mit aliphatisch und/oder cycloaliphatisch und/oder aromatisch gebundenen Isocyanat-Gruppen, welche 0 bis 20 Gewichtsteile eines organischen Lösemittels enthalten. Die aliphatischen Polyisocyanate sind gegenüber den aromatischen Polyisocyanaten zu bevorzugen. Geeignet sind insbesondere die in Polyurethan-Chemie hinreichend bekannten "Lackpolyisocyanate" auf Basis von Bis-(4-isocyanatocyclohexyl)-methan (H₁₂MDI), 1,6-Diisocyanatohexan (HDI), 1-Isocyanato-5-isocyanatomethyl-3,3,5-trimethyl-cyclohexan (IPDI) oder Kombinationen daraus. Der Begriff "Lackpolyisocyanate" kennzeichnet Allophanat-, Biuret-, Carbodiimid-, Isocyanurat-, Uretdion-, Urethan-Gruppen aufweisende Derivate dieser Diisocyanate, bei denen der Rest-Gehalt an monomeren Diisocyanaten dem Stand der Technik entsprechend auf ein Minimum reduziert wurde. Daneben können auch noch hydrophil modifizierte Polyisocyanate eingesetzt werden, die beispielsweise durch Umsetzung von "Lackpolyisocyanaten" mit Polyethylenglykol zugänglich sind. Als geeignete Polyisocyanate können beispielsweise handelsübliche HDI-Isocyanurate ohne (Handelsname Rhodocoat WT 2102, Fa. Rhodia AG) oder mit hydrophiler Modifizierung (Handelsname Basonat P LR 8878, Fa. BASF AG, Handelsname Desmodur DA bzw. Bayhydur 3100 der Fa. Bayer AG) eingesetzt werden.

Zur Herstellung des gebrauchsfertigen wässrigen hochvernetzten Zweikomponenten-Polyurethan-Beschichtungsmittels wird die Vernetzer-Komponente (H) ("Härter", Teil B) kurz vor der Verarbeitung in die Bindemittel-Komponente aus den Komponenten (A) bis (G) ("Stammlack", Teil A) eingemischt. Um ein problemloses Emulgieren zu erreichen, empfiehlt es sich, die Polyisocyanate mit geringen Mengen organischer Lösemittel wie z.B. Dipropylenglykoldimethylether (Proglyde DMM^{®}), Butyl(di)glykolacetat oder Butylacetat zu verdünnen. Meistens sind einfache Emulgiertechniken beispielsweise mit einem mechanischen Rührwerk (Bohrmaschine mit Rührer) ausreichend, um eine homogene Verteilung der Komponenten zu erreichen. Die Mengen der Bindemittel-Komponente und der Vernetzer-Komponente werden dabei so bemessen, dass das NCO/(OH+NH₍₂₎)-Equivalentverhältnis der Isocyanat-Gruppen der Vernetzer-Komponente und der Hydroxyl- und/oder Amino-Gruppen der Bindemittel-Komponente auf 1,1 bis 1,6 vorzugsweise 1,2 bis 1,4 eingestellt wird.

Es lassen sich auf diese Weise, bedingt durch eine hohe Vernetzungsdichte in Verbindung mit einer verringerten Hydrophilie, transparente kratzfeste Beschichtungen mit hervorragenden Eigenschaften erzielen. Dies gilt sowohl im Hinblick auf die Verarbeitbarkeit als auch in Bezug auf die mechanischen Eigenschaften verbunden mit einer sehr guten Lösemittel- und Chemikalienbeständigkeit. Aufgrund des vergleichsweise niedrigen Gehalts an hydrophilen Gruppen in der Bindemittel-Komponente zeichnen sich die Beschichtungen auch durch eine ausgezeichnete Wasserfestigkeit aus.

Die Applikation der erfindungsgemäßen wässrigen hochvernetzten Zweikomponenten-Polyurethan-Beschichtungsysteme mit verringerter Hydrophilie erfolgt mit den aus der Lacktechnologie bekannten Methoden, wie z.B. Fluten, Gießen, Rakeln, Rollen, Spritzen, Streichen, Tauchen, Walzen.

Die Trocknung und Aushärtung der Beschichtungen erfolgt im Allgemeinen bei normalen (Aussen- und Innen-)Temperaturen im Bereich von 5 bis 40 °C, d.h. ohne spezielles Erhitzen der Beschichtung, kann jedoch je nach Anwendung auch bei höheren Temperaturen im Bereich von 40 bis 100 °C erfolgen.

Ein weiterer Gegenstand der vorliegenden Erfindung betrifft die Verwendung der erfindungsgemäßen wässrigen hochvernetzten Zweikomponenten-Polyurethan-Beschichtungsysteme im Bau- oder im Industrie-Bereich als als formulierte oder unformulierte chemikalienstabile und lichtechte Lack- und/oder Beschichtungssysteme für die Oberflächen von mineralischen Baustoffen wie z.B. Beton, Gips, Keramik, Ton, Zement, sowie für die Oberflächen von Glas, Gummi, Holz und Holzwerkstoffen, Kunststoff, Metall, Papier, Verbundwerkstoffen, Leder oder als Bindemittel für die Vergütung von hydraulischen Bindemitteln.

Die erfindungsgemäß vorgeschlagenen wässrigen hochvernetzten Zweikomponenten-Polyurethan-Beschichtungsysteme eignen sich ausserdem einzeln oder in Kombination zum Systemaufbau von
α) Bodenbelägen für den Innenbereich,
β) Balkonbeschichtungen oder
γ) Parkdeck- und Parkhausbelägen.

Die nachfolgenden Beispiele sollen die Erfindung näher veranschaulichen.

### Beispiele:

### Beispiel 1: Hydroxyfunktionelle Oligourethan-Dispersionen, kettengestoppt mit Trimethylolpropan (TMP)

In einem Vierhalskolben ausgerüstet mit KPG-Rührer, Rückflußkühler, Thermometer und Stickstoff-Deckung wurde ein Gemisch aus 100,00 g Desmophen C 200 mit einer Hydroxyl-Zahl von 56 mg KOH-g⁻¹ (Fa. Bayer AG) und 48,88 g lsophorondiisocyanat (Vestanat^{®} IPDI, Fa. Degussa AG) unter Stickstoff-Deckung 2 h bei 80 - 90 °C in Gegenwart von 0,1 g Dibutylzinndilaureat (DBTL) als Katalysator gerührt. Nach Zugabe von 2,76 g Dimethylolpropionsäure (DMPA^{®}), 1,93 g 1,4-Butandiol und 15,0 g N-Methylpyrrolidon (NMP) zum Preaddukt wurde die Mischung unter Stickstoff-Deckung bei 80 - 90 ° C weiter gerührt, bis der berechnete NCO-Gehalt erreicht wurde (Theorie: 3,99 Gew.-%). Der Verlauf der Reaktion wurde acidimetrisch verfolgt.

Anschließend wurden 24,13 g Trimethylolpropan gelöst in 33,0 g N-Methylpyrrolidon (NMP) zugegeben und der Ansatz für weitere 4 Stunden bei 80-90 °C gerührt, bis der NCO-Wert auf Null gesunken war.

Nach dem Abkühlen auf 60 °C wurde das Prepolymer mit 1,87 g an Triethylamin (TEA) direkt neutralisiert.

Das Prepolymer wurde dann unter intensivem Rühren in 123,67 g Wasser dispergiert.

Es wurde eine stabile Oligourethan-Dispersion mit folgender Charakteristik erhalten:

| Charakteristik | milchig-weiße Flüssigkeit |
|---|---|
| Festkörper-Gehalt | 50 Gew.-% |
| Ladungsdichte | 10,05 mwq·(100 g)⁻¹ |
| Funktionalität (OH) | 4 |

### Beispiel 2: Wässriges hochvernetztes Zweikomponenten-Polyurethan-Beschichtungsystem auf Basis von Beispiel 1

Durch Einarbeiten von Rhodocoat WT 2102, welches zuvor mit Dipropylenglykoldimethylether (Proglyde DMM^{®}) mittels eines mechanischen Rührers gemischt wurde (9 :1), erhält man einen Zweikomponenten-Polyurethanklarlack mit einem NCO/OH-Äquivalentverhältnis von 1,3.

| Komponente | Gew.-Teile | Beschreibung |
|---|---|---|
| **TEIL A** | | |
| Beispiel 1 | 991,00 | Oligourethan-dispersion |
| Byk 024 | 3,00 | Entschäumer |
| Tego Wet 500 | 3,00 | Netzmittel |
| Edaplan LA413 | 3,00 | Verlaufsadditiv |
| Gesamt: | 1000,00 | Stammlack |
| **TEIL B** | | |
| Rhodocoat WT 2102 (9:1 in Proglyde DMM) | 119,20 | wasserdispergier-bares Polyisocyanat |
| Proglyde^{®} DMM | 13,22 | Lösemittel |
| Gesamt: | 132,42 | Härter |

### Beispiel 3: Hydroxyfunktionelle Oligourethan-Dispersionen, kettengestoppt mit Diethanolamin (DEA)

In einem Vierhalskolben ausgerüstet mit KPG-Rührer, Rückflußkühler, Thermometer und Stickstoff-Deckung wurde ein Gemisch aus 100,00 g Desmophen C 200 mit einer Hydroxyl-Zahl von 56 mg KOH-g⁻¹ (Fa. Bayer AG) und 46,01 g Isophorondiisocyanat (Vestanat^{®} IPDI, Fa. Degussa AG) unter Stickstoff-Deckung 2 h bei 80 - 90 °C in Gegenwart von 0,1 g Dibutylzinndilaureat (DBTL) als Katalysator gerührt. Nach Zugabe von 3,48 g Dimethylolpropionsäure (DMPA^{®}), 2,48 g 1,4-Butandiol und 15,16 g N-Methylpyrrolidon (NMP) zum Preaddukt wurde die Mischung unter Stickstoff-Deckung bei 80 - 90 ° C weiter gerührt, bis der berechnete NCO-Gehalt erreicht wurde (Theorie: 5,20 Gew.-%). Der Verlauf der Reaktion wurde acidimetrisch verfolgt.

Nach dem Abkühlen auf 60°C wurde das Prepolymer mit 2,36 g an Triethylamin (TEA) direkt neutralisiert.

Das Prepolymer wurde dann unter intensivem Rühren in 139,27 g Wasser dispergiert und sofort 21,76 g Diethanolamin (DEA) (50%ige wässrige Lösung) kettengestoppt.

Es wurde eine stabile Polyurethan-Dispersion mit folgender Charakteristik erhalten:

| Charakteristik | milchig-weiße Flüssigkeit |
|---|---|
| Festkörper-Gehalt | 50 Gew.-% |
| Ladungsdichte | 16,30 meq·(100 g)⁻¹ |
| Funktionalität (OH) | 4 |

### Beispiel 4: Wässriges hochvernetztes Zweikomponenten-Polvurethan-Beschichtungssystem auf Basis von Beispiel 3

Durch Einarbeiten von Rhodocoat WT 2102, welches zuvor mit Dipropylenglykoldimethylether (ProglydeDMM^{®}) mittels eines mechanischen Rührers gemischt wurde (9 :1), erhält man einen Zweikomponenten-Polyurethanklarlack mit einem NCO/OH-Equivalentverhältnis von 1,3.

| Komponente | Gew.-Teile | Beschreibung |
|---|---|---|
| | **TEIL A** | |
| Beispiel 3 | 991,00 | Oligourethan-Dispersion |
| Byk 024 | 3,00 | Entschäumer |
| Tego Wet 500 | 3,00 | Netzmittel |
| Edaplan LA 413 | 3,00 | Verlaufsadditiv |
| Gesamt: | 1000,00 | Stammlack |
| | **TEIL B** | |
| Rhodocoat WT 2102 (9:1 in Proglyde DMM) | 119,20 | wasserdispergier-bares Polyisocyant |
| Proglyde^{®} DMM | 13,22 | Lösemittel |
| Gesamt: | 132,42 | Härter |

### Beispiel 5: Anwendunqstechnische Prüfung der Beispiele 2 und 4

Die wässrigen Zweikomponenten-Polyurethan-Beschichtungen wurden mittels Aufziehrakel auf Polyesterfolien aufgezogen (Nassfilmstärke 150 µm). Anschließend wurden die Filme bei Raumtemperatur getrocknet. Nach 7 Tagen wird die Pendeldämpfung nach König (DIN 53 157) bestimmt. Die Beständigkeiten gegen Wasser und diverse Lösemittel sowie die Filmtransparenz wurden ebenfalls nach 7 Tagen Trocknung getestet. Der Film wurde visuell beurteilt.

Die Prüfergebnisse sind in der nachfolgenden Tabelle im einzelnen aufgeführt.

| **Prüfung** | **Trocknung** | **Bsp. 2** | **Bsp. 4** |
|---|---|---|---|
| Pendelhärte nach König [s] | 7d RT | 106 | 108 |
| Filmtranspa-renz | 7d RT | klar | klar |
| Wasserbe-ständigkeit¹⁾ (30 min Einwirkung) | 7d RT | 0 | 0 |
| Isopropanol/Wasser¹⁾ (10 min Einwirkung) | 7d RT | 0 | 0 |
| Ethanol/Wasser¹⁾ (10 min Einwirkung) | 7d RT | 0 | 0 |
| Aceton¹⁾ (10 min Einwirkung) | 7d RT | 0 | 0 |

| | | | |
|---|---|---|---|
| ¹⁾ 0 = bestes Ergebnis (ohne Befund 6 = schlechtestes Ergebnis (Film vollständig abgelöst) | | | |

## Patentansprüche

1. Wässriges hochvernetztes Zweikomponenten-Polyurethan-Besehichtungssystem, erhältlich durch
a) die Herstellung einer Bindemittel-Komponente auf Basis einer wässrigen Lösung oder Dispersion von niedermolekularen hydroxy- und/oder aminofunktionellen Oligo- oder Polyurethanen, wobei man
a₁) 10 bis 50 Gewichtsteile einer höhermolekularen Polyol-Komponente (A)(i) mit zwei oder mehreren gegenüber Polyisocyanaten reaktiven Hydroxyl-Gruppen und einer Molekularmasse von 500 bis 5 000 Dalton sowie 0 bis 5 Gewichtsteile einer niedermolekularen Polyol-Komponente (A)(ii) mit zwei oder mehreren gegenüber Polyisocyanaten reaktiven Hydroxyl-Gruppen und einer Molekularmasse von 50 bis 499 Dalton mit 2 bis 20 Gewichtsteilen einer Polyisocyanat-Komponente (B), bestehend aus mindestens einem Polyisocyanat, Polyisocyanat-Derivat oder Polyisocyanat-Homologen mit zwei oder mehreren aliphatischen oder aromatischen Isocyanat-Gruppen unter Zugabe von 0 bis 6 Gewichtsteilen einer Lösemittel-Komponente (C) gegebenenfalls in Gegenwart eines Katalysators teilweise oder vollständig umsetzt,
a₂) das Polyurethan-Preaddukt aus Stufe a₁) mit 0,1 bis 1,5 Gewichtsteilen einer niedermolekularen und anionisch modifizierbaren Polyol-Komponente (A)(iii) mit einer oder mehreren gegenüber Polyisocyanaten reaktiven Hydroxyl-Gruppen und einer oder mehreren inerten Carbonsäure- und/oder Sulfonsäure-Gruppe(n), die in Gegenwart von Basen teilweise oder vollständig in Carboxylat- bzw. Sulfonatgruppen überführt werden können oder bereits in Form von Carboxylat- und/oder Sulfonat-Gruppen vorliegen, mit einer Molekularmasse von 100 bis 499 Dalton und mit 0 bis 8 Gewichtsteilen einer polymeren Diolkomponente (A)(iv) mit zwei oder mehreren gegenüber Polyisocyanaten reaktiven Hydroxyl-Gruppen und weiteren gegenüber Polyisocyanaten inerten hydrophilen Gruppen mit einer Molekularmasse von 500 bis 5 000 Dalton gegebenenfalls in Gegenwart eines Katalysators umsetzt,
a₃) die freien Isocyanat-Gruppen des Polyurethan-Prepolymers aus Stufe a₂) teilweise oder vollständig mit 0,1 bis 15 Gewichtsteilen einer multifunktionellen Kettenstopper-Komponente (D) mit drei oder mehreren gegenüber Isocyanat-Gruppen reaktiven Hydroxyl- und/oder primären und/oder sekundären Amino-Gruppen und einer Molekularmasse von 50 bis 500 Dalton umsetzt, von denen eine mit dem Polyurethan-Preaddukt abreagiert,
a₄) das multifunktionelle Polyurethan-Oligomer oder -Polymer aus Stufe a₃) zur teilweisen oder vollständigen Neutralisation der Säure-Gruppen mit 0,1 bis 1 Gewichtsteilen einer Neutralisations-Komponente (E) umsetzt und anschließend
a₅) das neutralisierte Polyurethan-Oligomer oder -Polymer aus Stufe a₄) in 40 bis 60 Gewichtsteilen Wasser, welches noch 0 bis 50 Gewichtsteile einer Formulierungskomponente (F) enthält, dispergiert,
a₆) gegebenenfalls das nur teilweise kettengestoppte Polyurethan-Oligomer oder -Polymer aus Stufe a₅) noch mit 0 bis 15 Gewichtsteilen einer Kettenverlängerungs-Komponente (G) mit zwei oder mehreren gegenüber Isocyanat-Gruppen reaktiven primären und/oder sekundären Amino-Gruppen und einer Molekularmasse von 50 bis 500 Dalton umsetzt
sowie
b) durch die anschließende Umsetzung der Bindemittel-Komponente aus Stufe a₅) oder Stufe a₆) mit einer Vernetzer-Komponente (H) im Verhältnis 3 : 1 bis 5 : 1, wobei als Vernetzer-Komponente (H) wasserdispergierbare Polyisocyanate mit aliphatisch und/oder cycloaliphatisch und/oder aromatisch gebundenen Isocyanat-Gruppen eingesetzt werden, welche 0 bis 20 Gewichtsteile eines organischen Lösemittels enthalten können.

2. Beschichtungssystem nach Anspruch 1,
**dadurch gekennzeichnet,**
**dass** als höhermolekulare Polyol-Komponente (A)(i) Polyalkylenglykole, aliphatische oder aromatische Polyester, Polycaprolactone, Polycarbonate, α,ω-Polymethacrylatdiole, α,ω-Dihydroxyalkylpolydimethylsiloxane, hydroxyfunktionelle Makromonomere,hydroxyfunktionelleTelechele,hydroxyfunktionelle Epoxid-Harze mit einer Molekularmasse von 1000 bis 3000 Dalton oder geeignete Gemische daraus eingesetzt werden.

3. Beschichtungssystem nach Anspruch 1 oder 2,
**dadurch gekennzeichnet,**
**dass** als Komponente (A)(i) lineare bzw. difunktionelle hydrophob modifizierte Polyether-Polyole, bestehend aus verseifungsstabilen Blockcopolymeren mit ABA-, BAB- oder (AB)ₙ-Struktur, wobei A ein Polymer-Segment mit hydrophobierenden Eigenschaften und B ein Polymer-Segment auf Basis Polypropylenoxid darstellt, mit einer Molekularmasse von 1000 bis 3000 Dalton eingesetzt werden.

4. Beschichtungssystem nach einem der Ansprüche 1 bis 3,
**dadurch gekennzeichnet,**
**dass** als Komponente (A)(ii) 1,4-Butandiol eingesetzt wird.

5. Beschichtungssystem nach einem der Ansprüche 1 bis 4,
**dadurch gekennzeichnet,**
**dass** als Komponente (A)(iii) eine Bishydroxyalkancarbonsäure und/oder Bishydroxysulfonsäure bzw. deren Alkalisalze mit einer Molekularmasse von 100 bis 499 Dalton eingesetzt wird.

6. Beschichtungssystem nach Anspruch 5,
**dadurch gekennzeichnet,**
**dass** als Bishydroxyalkancarbonsäure 2-Hydroxymethyl-2-methyl-3-hydroxypropionsäure bzw. Dimethylolpropionsäure eingesetzt wird.

7. Beschichtungssystem nach einem der Ansprüche 1 bis 6,
**dadurch gekennzeichnet,**
**dass** als Komponente (A)(iv) Umsetzungsprodukte aus Poly-(ethylenoxid[-*co*/*block*/*ran*-propylenoxid])-monoalkylethern, einem Diisocyanat und Diethanolamin eingesetzt werden.

8. Beschichtungssystem nach einem der Ansprüche 1 bis 7,
**dadurch gekennzeichnet,**
**dass** als multifunktionelle Kettenstopper-Komponente (D) aliphatische oder cycloaliphatische Polyole und/oder Polyamine und/oder Aminoalkohole eingesetzt werden.

9. Beschichtungssystem nach Anspruch 8,
**dadurch gekennzeichnet,**
**dass** als multifunktionelle Kettenstopper-Komponente (D) Diethanolamin und/oder Trimethylolpropan eingesetzt werden.

10. Beschichtungssystem nach einem der Ansprüche 1 bis 9,
**dadurch gekennzeichnet,**
**dass** als Formulierungs-Komponente (F) Entschäumer, Entlüfter, Gleit- und Verlaufadditive, strahlenhärtende Additive, Dispergieradditive, Substratnetzadditive, Hydrophobierungsmittel, Rheologieadditive wie Polyurethan-Verdicker, Koaleszenzhilfsmittel, Mattierungsmittel, Haftvermittler, Frostschutzmittel, Antioxidantien, UV-Stabilisatoren, Bakterizide, Fungizide, weitere Polymere und/oder Polymer-Dispersionen sowie Füllstoffe, Pigmente, Mattierungsmittel oder geeignete Kombination daraus eingesetzt werden.

11. Beschichtungssystem nach einem der Ansprüche 1 bis 10,
**dadurch gekennzeichnet,**
**dass** als Vernetzer-Komponente (H) wasserdispergierbare Polyisocyanate mit aliphatisch und/oder cycloaliphatisch und/oder aromatisch gebundenen Isocyanat-Gruppen eingesetzt werden, welche 0 bis 20 Gewichtsteile eines organischen Lösemittels enthalten.

12. Beschichtungssystem nach einem der Ansprüche 1 bis 11,
**dadurch gekennzeichnet,**
**dass** das NCO/OH-Äquivalentverhältnis der Komponenten (A) und (B) auf einen Wert von 1,25 bis 2,5, vorzugsweise 1,5 bis 2,25, eingestellt wird.

13. Beschichtungssystem nach einem der Ansprüche 1 bis 12,
**dadurch gekennzeichnet,**
**dass** die Reaktionsstufen a₁) und a₂) in Gegenwart von 0,01 bis 1 Gew.-% bezogen auf die Komponenten (A) und (B) eines für Polyadditionsreaktionen an Polyisocyanate üblichen Katalysators durchgeführt werden.

14. Beschichtungssystem nach einem der Ansprüche 1 bis 13,
**dadurch gekennzeichnet,**
**dass** die Kettenstopper-Komponente (D) in einer solchen Menge zugesetzt wird, dass der Kettenstoppungsgrad bezogen auf die freien Isocyanat-Gruppen des Polyurethan-Prepolymers aus den Komponenten (A) und (B) bei 80 bis 100 Äquivalent-% liegt.

15. Beschichtungssystem nach einem der Ansprüche 1 bis 14,
**dadurch gekennzeichnet,**
**dass** die Neutralisations-Komponente (E) in einer solchen Menge zugegeben wird, dass der Neutralisationsgrad bezogen auf die freien Carbonsäure- und/oder Sulfonsäure-Gruppen des Polyurethan-Oligomers- oder -Polymers aus den Komponenten (A), (B) und (D) bei 70 bis 100 Äquivalent-%, vorzugsweise bei 80 bis 90 Äquivalent-% liegt.

16. Beschichtungssystem nach einem der Ansprüche 1 bis 15,
**dadurch gekennzeichnet,**
**dass** die Kettenverlängerungs-Komponente (G) in einer solchen Menge zugesetzt wird, dass der Kettenverlängerungsgrad bezogen auf die freien Isocyanat-Gruppen des Polyurethan-Oligomers oder - Polymers aus den Komponenten (A), (B), (D) und (E) bei 0 bis 20 Äquivalent-% liegt.

17. Beschichtungssystem nach einem der Ansprüche 1 bis 16,
**dadurch gekennzeichnet,**
**dass** der Festkörper-Gehalt an Polyurethan-Oligomer oder -Polymer bestehend aus den Komponenten (A), (B), (D), (E) und (G) auf 35 bis 70 Gew.-%, vorzugsweise 45 bis 55 Gew.-% bezogen auf die Gesamtmenge derwässrigen Bindemittel-Komponente bestehend aus den Komponenten (A) bis (E) und (G) eingestellt wird.

18. Beschichtungssystem nach einem der Ansprüche 1 bis 17,
**dadurch gekennzeichnet,**
**dass** die mittlere Partikelgröße der Mizellen der wässrigen Bindemittel-Komponente bestehend aus den Komponenten (A) bis (E) und (G) 10 bis 300 nm beträgt.

19. Beschichtungssystem nach einem der Ansprüche 1 bis 18,
**dadurch gekennzeichnet,**
**dass** das Polyurethan-Oligomer oder -Polymer bestehend aus den Komponenten (A), (B), (D), (E) und (G) eine mittlere Molekularmasse von 1 000 bis 20 000 Dalton aufweist.

20. Beschichtungssystem nach einem der Ansprüche 1 bis 19,
**dadurch gekennzeichnet,**
**dass** das NCO/(OH+NH₍₂₎)-Äquivalentverhältnis der Isocyanat-Gruppen der Vernetzer-Komponente und der Hydroxyl- und/oder Amino-Gruppen der Bindemittel-Komponente auf 1,1 bis 1,6, vorzugsweise 1,2 bis 1,4 eingestellt wird.

21. Verfahren zur Herstellung des wässrigen Zweikomponenten-Polyurethan-Beschichtungssystems nach den Ansprüchen 1 bis 20,
**dadurch gekennzeichnet,**
**dass** man in der Reaktionsstufe
a₁) die Komponenten (A)(i), (A)(ii), (B) und (C) gegebenenfalls in Gegenwart eines Katalysators zu einem Polyurethan-Preaddukt zur Reaktion bringt, wobei die Hydroxyl-Gruppen der Komponenten (A)(i) und (A)(ii) teilweise oder vollständig mit den Isocyanat-Gruppen der Komponente (B) umgesetzt werden,
a₂) das Polyurethan-Preaddukt aus Reaktionsstufe a₁) mit den Komponenten (A)(iii) und (A)(iv) zur Reaktion bringt,
a₃) das anionisch modifizierbare Polyurethan-Prepolymer aus Reaktionsstufe a₂) mit der Komponente (D) zur Reaktion bringt, wobei jeweils nur eine reaktive Gruppe der Komponente (D) mit einer Isocyanat-Gruppe des Polyurethan-Preaddukts abreagiert,
a₄) das funktionalisierte und anionisch modifizierbare Polyurethan-Oligomer oder -Polymer aus Reaktionsstufe a₃), das zwei oder mehrere reaktive Gruppen pro Kettenende und eine Gesamtfunktionalität von ≥ 4 aufweist, zur teilweisen oder vollständigen Neutralisation mit der Komponente (E) zur Reaktion bringt und anschließend
a₅) das funktionalisierte und anionisch modifizierte Polyurethan-Oligomer oder -Polymer aus Reaktionsstufe a₄) in Wasser, welches gegebenenfalls noch die Komponente (F) enthält, dispergiert,
a₆) ggf. das nur teilweise kettengestoppte, funktionalisierte und anionisch modifizierte Polyurethan-Oligomer oder-Polymer aus Stufe a₅) mit der Komponente (G) zur Reaktion bringt und schließlich
b) die Bindemittel-Komponente aus Reaktionstufe a₅) oder Reaktionsstufe a₆) mit der gegebenenfalls hydrophil modifizierten Vernetzer-Komponente (H) zur Reaktion bringt, wobei die Vernetzer-Komponente (H) zur Bindemittel-Komponente gegeben wird und nach der Applikation ein hochvernetztes Polyurethan-Beschichtungssystem erhalten wird.

22. Verfahren nach Anspruch 21,
**dadurch gekennzeichnet,**
**dass** die Stufen a₄) und a₅) so zusammengefasst werden, dass die Komponente (E) dem Wasser vor dem Dispergieren zugesetzt wird.

23. Verfahren nach Anspruche 21,
**dadurch gekennzeichnet,**
**dass** die Stufen a₅) und a₆) so zusammengefasst werden, dass die Komponente (G) dem Wasser vor dem Dispergieren zugesetzt wird.

24. Verfahren nach einem der Ansprüche 21 bis 23,
**dadurch gekennzeichnet,**
**dass** man die Reaktionstufen a₁) bis a₃) bei einer Temperatur bei 60 bis 120 °C, vorzugsweise bei 80 bis 100 °C durchführt.

25. Verfahren nach einem der Ansprüche 21 bis 24,
**dadurch gekennzeichnet,**
**dass** man die Reaktionstufe a₄) bei einer Temperatur von 40 bis 65 °C, vorzugsweise bei ca. 50 °C durchführt.

26. Verfahren nach einem der Ansprüche 21 bis 25,
**dadurch gekennzeichnet,**
**dass** man die Reaktionsstufen a₅) und a₆) bei 30 bis 50 °C, vorzugsweise bei ca. 40 ° C durchführt.

27. Verfahren nach einem der Ansprüche 21 bis 26,
**dadurch gekennzeichnet,**
**dass** man die Reaktionsstufe b) bei einer Temperatur von 20 bis 40 °C, vorzugsweise bei ca. 20° C durchführt.

28. Verwendung der erfindungsgemäßen wässrigen hochvernetzten Zweikomponenten-Polyurethan-Beschichtungsysteme nach den Ansprüchen 1 bis 20 im Bau- oder im Industrie-Bereich als formulierte oder unformulierte chemikalienstabile und lichtechte Lack- und/oder Beschichtungssysteme für die Oberflächen von mineralischen Baustoffen wie z.B. Beton, Gips, Keramik, Ton, Zement sowie für die Oberflächen von Glas, Gummi, Holz und Holzwerkstoffen, Kunststoff, Metall, Papier, Verbundwerkstoffen, Leder oder als Bindemittel für die Vergütung von hydraulischen Bindemitteln.

29. Verwendung des unformulierten oder formulierten wässrigen Zweikomponenten-Polyurethan-Beschichtungssystems nach den Ansprüchen 1 bis 20 einzeln oder in Kombination zum Systemaufbau von
α) Bodenbelägen für den Innenbereich,
β) Balkonbeschichtungen oder
γ) Parkdeck- und Parkhausbelägen.

## Claims

1. Aqueous highly cross-linked two-component polyurethane coating system obtainable by
a) producing a binder component based on an aqueous solution or dispersion of low-molecular hydroxyfunctional and/or aminofunctional oligourethanes or polyurethanes wherein
a₁) 10 to 50 parts by weight of a higher-molecular polyol component (A)(i) containing two or more hydroxyl groups that are reactive with polyisocyanates and having a molecular mass of 500 to 5000 Daltons and 0 to 5 parts by weight of a low-molecular polyol component (A)(ii) containing two or more hydroxyl groups that are reactive with polyisocyanates and having a molecular mass of 50 to 499 Daltons are partially or completely reacted with 2 to 20 parts by weight of a polyisocyanate component (B) consisting of at least one polyisocyanate, polyisocyanate derivative or polyisocyanate homologue containing two or more aliphatic or aromatic isocyanate groups with addition of 0 to 6 parts by weight of a solvent component (C) optionally in the presence of a catalyst,
a₂) the polyurethane preadduct from step a₁) is reacted with 0.1 to 1.5 parts by weight of a low-molecular and anionically modifiable polyol component (A) (iii) containing one or more hydroxyl groups that are reactive with polyisocyanates and one or more inert carboxylic acid and/or sulfonic acid group(s) which can be partially or completely converted into carboxylate or sulfonate groups in the presence of bases or are already present in the form of carboxylate and/or sulfonate groups, having a molecular mass of 100 to 499 Daltons and with 0 to 8 parts by weight of a polymeric diol component (A)(iv) containing two or more hydroxyl groups that are reactive with polyisocyanates and other hydrophilic groups that are inert towards polyisocyanates having a molecular mass of 500 to 5000 Daltons optionally in the presence of a catalyst,
a₃) the free isocyanate groups of the polyurethane prepolymer from step a₂) are partially or completely reacted with 0.1 to 15 parts by weight of a multifunctional chain-stopper component (D) containing three or more hydroxyl groups and/or primary and/or secondary amino groups that are reactive with isocyanate groups and having a molecular mass of 50 to 500 Daltons, one of which reacts with the polyurethane preadduct,
a₄) the multifunctional polyurethane oligomer or polymer from step a₃) is reacted with 0.1 to 1 part by weight of a neutralization component (E) to partially or completely neutralize the acidic groups and subsequently
a₅) the neutralized polyurethane oligomer or polymer from step a₄) is dispersed in 40 to 60 parts by weight water which also contains 0 to 50 parts by weight of a formulation component (F),
a₆) optionally the only partially chain-terminated polyurethane oligomer or polymer from step a₅) is also reacted with 0 to 15 parts by weight of a chain extending component (G) containing two or more primary and/or secondary amino groups that are reactive with isocyanate groups and having a molecular mass of 50 to 500 Daltons
and
b) by subsequently reacting the binder component from step a₅) or step a₆) with a cross-linking component (H) in a ratio of 3:1 to 5:1 in which water-dispersible polyisocyanates containing aliphatically and/or cycloaliphatically and/or aromatically bound isocyanate groups which can contain 0 to 20 parts by weight of an organic solvent are used as the cross-linking component (H).

2. Coating system according to claim 1, **characterized in that** polyalkylene glycols, aliphatic or aromatic polyesters, polycaprolactones, polycarbonates, α, ω-polymethacrylate diols, α,ω-dihydroxyalkylpolydimethylsiloxanes, hydroxyfunctional macro-monomers, hydroxyfunctional telechels, hydroxyfunctional epoxide resins having a molecular mass of 1000 to 3000 Daltons or suitable mixtures thereof are used as the higher-molecular polyol component (A)(i).

3. Coating system according to claim 1 or 2, **characterized in that** linear or difunctional hydrophobically modified polyether polyols consisting of saponification-resistant block copolymers having an ABA, BAB or (AB)ₙ structure in which A represents a polymer segment with hydrophobizing properties and B represents a polymer segment based on polypropylene oxide, having a molecular mass of 1000 to 3000 Daltons are used as component (A) (i).

4. Coating system according to one of the claims 1 to 3, **characterized in that** 1,4-butanediol is used as component (A)(ii).

5. Coating system according to one of the claims 1 to 4, **characterized in that** a bishydroxyalkanecarboxylic acid and/or bishydroxysulfonic acid or alkali salts thereof having a molecular mass of 100 to 499 Daltons is used as component (A)(iii).

6. Coating system according to claim 5, **characterized in that** 2-hydroxymethyl-2-methyl-3-hydroxypropionic acid or dimethylolpropionic acid is used as the bishydroxyalkanecarboxylic acid.

7. Coating system according to one of the claims 1 to 6, **characterized in that** reaction products of poly(ethylene oxide[-*co*/*block*/*ran*-propylene oxide])-monoalkyl ethers, a diisocyanate and diethanolamine are used as component (A)(iv).

8. Coating system according to one of the claims 1 to 7, **characterized in that** aliphatic or cycloaliphatic polyols and/or polyamines and/or amino-alcohols are used as the multi-functional chain-stopper component (D).

9. Coating system according to claim 8, **characterized in that** diethanolamine and/or trimethylolpropane are used as the multi-functional chain-stopper component (D).

10. Coating system according to one of the claims 1 to 9, **characterized in that** antifoaming agents, deaerators, lubricating and flow-control additives, radiation hardening additives, dispersing additives, substrate wetting additives, hydrophobizing agents, rheology additives such as polyurethane thickeners, coalescing agents, dulling agents, bonding agents, antifreeze agents, antioxidants, UV stabilizers, bactericides, fungicides, other polymers and/or polymer dispersions as well as fillers, pigments, dulling agents or suitable combinations thereof are used as the formulation component (F).

11. Coating system according to one of the claims 1 to 10, **characterized in that** water-dispersible polyisocyanates containing aliphatically and/or cycloaliphatically and/or aromatically bound isocyanate groups which contain 0 to 20 parts by weight of an organic solvent are used as the cross-linking component (H).

12. Coating system according to one of the claims 1 to 11, **characterized in that** the NCO/OH equivalent ratio of components (A) and (B) is adjusted to a value of 1.25 to 2.5, preferably 1.5 to 2.25.

13. Coating system according to one of the claims 1 to 12, **characterized in that** the reactions steps a₁) and a₂) are carried out in the presence of 0.01 to 1 weight % based on the components (A) and (B) of a conventional catalyst for polyaddition reactions on polyisocyanates.

14. Coating system according to one of the claims 1 to 13, **characterized in that** the chain-stopper component (D) is added in such an amount that the degree of chain termination based on the free isocyanate groups of the polyurethane prepolymer comprising components (A) and (B) is 80 to 100 equivalent %.

15. Coating system according to one of the claims 1 to 14, **characterized in that** the neutralization component (E) is added in such an amount that the degree of neutralization based on the free carboxylic acid and/or sulfonic acid groups of the polyurethane oligomer or polymer consisting of components (A), (B) and (D) is 70 to 100 equivalent %, preferably 80 to 90 equivalent %.

16. Coating system according to one of the claims 1 to 15, **characterized in that** the chain extending component (G) is added in such an amount that the degree of chain extension based on the free isocyanate groups of the polyurethane oligomer or polymer consisting of components (A), (B), (D) and (E) is 0 to 20 equivalent %.

17. Coating system according to one of the claims 1 to 16, **characterized in that** the solids content of polyurethane oligomer or polymer consisting of components (A), (B), (D), (E) and (G) is adjusted to 35 to 70 weight %, preferably 45 to 55 weight % based on the total amount of the aqueous binder component consisting of components (A) to (E) and (G).

18. Coating system according to one of the claims 1 to 17, **characterized in that** the average particle size of the micelles of the aqueous binder component consisting of components (A) to (E) and (G) is 10 to 300 nm.

19. Coating system according to one of the claims 1 to 18, **characterized in that** the polyurethane oligomer or polymer consisting of the components (A), (B), (D), (E) and (G) has an average molecular mass of 1000 to 20,000 Daltons.

20. Coating system according to one of the claims 1 to 19, **characterized in that** the NCO/(OH+NH(₂))-equivalent ratio of the isocyanate groups of the cross-linking component and the hydroxyl and/or amino groups of the binder component is adjusted to 1.1 to 1.6, preferably 1.2 to 1.4.

21. Process for the production of the aqueous two-component polyurethane coating system according to claims 1 to 20, **characterized in that** in reaction step
a₁) components (A)(i), (A)(ii), (B) and (C) are reacted, optionally in the presence of a catalyst, to form a polyurethane preadduct, during which the hydroxyl groups of components (A)(i) and (A)(ii) are partially or completely reacted with the isocyanate groups of component (B),
a₂) the polyurethane preadduct from reaction step a₁) is reacted with components (A)(iii) and (A)(iv),
a₃) the anionically modifiable polyurethane prepolymer from reaction step a₂) is reacted with component (D), whereby in each case only one reactive group of component (D) reacts with one isocyanate group of the polyurethane preadduct,
a₄) the functionalized and anionically modifiable polyurethane oligomer or polyurethane polymer from reaction step a₃) which has two or more reactive groups per chain end and a total functionality of ≥ 4 is reacted with component (E) for partial or complete neutralization and subsequently
a₅) the functionalized and anionically modified polyurethane oligomer or polyurethane polymer from reaction step a₄) is dispersed in water which optionally also contains the component (F),
a₆) optionally the only partially chain-stopped, functionalized and anionically modified polyurethane oligomer or polyurethane polymer from step a₅) is reacted with component (G) and finally
b) the binder component from reaction step a₅) or reaction step a₆) is reacted with the optionally hydrophilically modified cross-linking component (H), the cross-linking component (H) being added to the binder component and after the application a highly cross-linked polyurethane coating system is obtained.

22. Process according to claim 21, **characterized in that** steps a₄) and a₅) are combined in such a manner that component (E) is added to the water before dispersion.

23. Process according to claim 21, **characterized in that** steps a₅) and a₆) are combined in such a manner that component (G) is added to the water before dispersion.

24. Process according to one of the claims 21 to 23, **characterized in that** reaction steps a₁) to a₃) are carried out at a temperature of 60 to 120°C, preferably at 80 to 100°C.

25. Process according to one of the claims 21 to 24, **characterized in that** reaction step a₄) is carried out at a temperature of 40 to 65°C, preferably at about 50°C.

26. Process according to one of the claims 21 to 25, **characterized in that** reaction steps a₅) and a₆) are carried out at 30 to 50°C, preferably at about 40°C.

27. Process according to one of the claims 21 to 26, **characterized in that** reaction step b) is carried out at a temperature of 20 to 40°C, preferably at about 20°C.

28. Use of the aqueous highly cross-linked two-component polyurethane coating systems according to the invention according to claims 1 to 20 in the building or industrial field as formulated or unformulated chemical-resistant and lightfast paint and/or coating systems for surfaces of mineral building materials such as concrete, plaster, ceramics, clay, cement as well as for surfaces of glass, rubber, wood and wooden materials, plastic, metal, paper, composite materials, leather or as a binder for hardening hydraulic binders.

29. Use of the unformulated or formulated aqueous two-component polyurethane coating system according to claims 1 to 20 individually or in combination for the system construction of
α) floor coverings for indoors,
β) coatings for balconies, or
γ) coverings for parking decks and multi-storey parking garages.

## Revendications

1. Système de revêtement polyuréthanne bicomposant aqueux hautement réticulé, pouvant être obtenu a) par la préparation d'un composant liant à base d'une solution ou d'une dispersion aqueuse d'oligo- ou de polyuréthannes à fonctionnalité hydroxy et/ou amino à faible masse moléculaire, ce pour quoi a₁) on fait réagir en totalité ou en partie, par addition de 0 à 6 parties en poids d'un composant solvant (C), éventuellement en présence d'un catalyseur, 10 à 50 parties en poids d'un composant polyol (A)(i) à grande masse moléculaire, comportant deux ou plus groupes hydroxyle réactifs vis-à-vis des polyisocyanates et ayant une masse moléculaire de 500 à 5000 daltons, ainsi que 0 à 5 parties en poids d'un composant polyol (A)(ii) à faible masse moléculaire, ayant deux ou plus groupes hydroxyle réactifs vis-à-vis des polyisocyanates et ayant une masse moléculaire de 50 à 499 daltons, avec 2 à 20 parties en poids d'un composant polyisocyanate (B), constitué d'au moins un polyisocyanate, un dérivé de polyisocyanate ou un homologue de polyisocyanate, comportant deux ou plus groupes isocyanate aliphatiques ou aromatiques,
a₂) on fait réagir, éventuellement en présence d'un catalyseur, le pré-adduit de polyuréthanne de l'étape (a₁) avec 0,1 à 1,5 parties en poids d'un composant polyol (A)(iii) à faible masse moléculaire et pouvant subir une modification anionique, ayant un ou plusieurs groupes hydroxyle réactifs vis-à-vis des polyisocyanates, et un ou plusieurs groupes acide carboxylique et/ou acide sulfonique inertes, qui en présence de bases peuvent en totalité ou en partie être convertis en groupes carboxylate ou sulfonate, ou qui sont déjà présents sous forme de groupes carboxylate et/ou sulfonate, ayant une masse moléculaire de 100 à 499 daltons, et avec 0 à 8 parties en poids d'un composant diol polymère (A)(iv), ayant deux ou plus groupes hydroxyle réactifs vis-à-vis des polyisocyanates, et d'autres groupes hydrophiles inertes vis-à-vis des polyisocyanates, ayant une masse moléculaire de 500 à 5000 daltons,
a₃) on fait réagir les groupes isocyanate libres du prépolymère de polyuréthanne de l'étape a₂), en totalité ou en partie, avec 0,1 à 15 parties en poids d'un composant de terminaison de chaîne (D) multifonctionnel ayant trois ou plus groupes hydroxyle et/ou amino primaires et/ou secondaires réactifs vis-à-vis des groupes isocyanate et ayant une masse moléculaire de 50 à 500 daltons, parmi lesquels l'un réagit avec le pré-adduit de polyuréthanne,
a₄) on fait réagir l'oligomère ou le polymère de polyuréthanne multifonctionnel de l'étape a₃), pour une neutralisation partielle ou totale des groupes acides, avec 0,1 à 1 partie en poids d'un composant de neutralisation (E), puis
a₅) on disperse l'oligomère ou le polymère de polyuréthanne neutralisé de l'étape a₄) dans 40 à 60 parties en poids d'eau, qui contient encore 0 à 50 parties en poids d'un composant de formulation (F), a₆) éventuellement, on fait réagir l'oligomère ou le polymère de polyuréthanne, qui n'a subi que partiellement une terminaison de chaîne, de l'étape a₅), avec encore 0 à 15 parties en poids d'un composant d'extension de chaîne (G), ayant deux ou plus groupes amino primaires et/ou secondaires, réactifs vis-à-vis des groupes isocyanate, et ayant une masse moléculaire de 50 à 500 daltons,
puis
b) on procède à la réaction du composant liant de l'étape a₅) ou de l'étape a₆) avec un composant de réticulation (H) selon un rapport de 3:1 à 5:1, en utilisant en tant que composant de réticulation (H) des polyisocyanates dispersibles dans l'eau, ayant des groupes isocyanate à liaison aliphatique et/ou cycloaliphatique et/ou aromatique, qui peuvent contenir 0 à 20 parties en poids d'un solvant organique.

2. Système de revêtement selon la revendication 1, **caractérisé en ce qu'**on utilise en tant que composant polyol (A)(i) à grande masse moléculaire des polyalkylèneglycols, des polyesters aliphatiques ou aromatiques, des polycaprolactones, des polycarbonates, des α,ω-polyméthacrylatediols, des α, ω-dihydroxyalkylpolydiméthylsiloxanes, des macromonomères hydroxyfonctionels, des composés téléchéliques à fonctionnalité hydroxy, des résines époxydes à fonctionnalité hydroxy ayant une masse moléculaire de 1000 à 3000 daltons, ou des mélanges appropriés de ceux-ci.

3. Système de revêtement selon la revendication 1 ou 2, **caractérisé en ce qu'**on utilise en tant que composant (A)(i) des polyéther-polyols à chaîne droite ou difonctionnels, ayant subi une modification hydrophobe, constitués de copolymères à blocs stables à la saponification, à structure ABA, BAB ou (AB)ₙ, où A est un segment polymère ayant des propriétés hydrophobisantes, et B est un segment polymère à base de poly(oxyde de propylène), ayant une masse moléculaire de 1000 à 3000 daltons.

4. Système de revêtement selon l'une des revendications 1 à 3, **caractérisé en ce qu'**on utilise en tant que composant (A)(ii) du 1,4-butanediol.

5. Système de revêtement selon l'une des revendications 1 à 4, **caractérisé en ce qu'**on utilise en tant que composant (A)(iii) un acide bishydroxyalcanecarboxylique et/ou un acide bishydroxysulfonique, ou leurs sels de métaux alcalins, ayant une masse moléculaire de 100 à 499 daltons.

6. Système de revêtement selon la revendication 5, **caractérisé en ce qu'**on utilise en tant qu'acide bishydroxyalcanecarboxylique l'acide 2-hydroxyméthyl-2-méthyl-3-hydroxypropionique ou l'acide diméthylolpropionique.

7. Système de revêtement selon l'une des revendications 1 à 6, **caractérisé en ce qu'**on utilise en tant que composant (A)(iv) des produits de réaction de monoalkyléthers poly(oxyde d'éthylène[*co*/à *blocs*/*aléatoire-oxyde* de propylène]), d'un diisocyanate et de diéthanolamine.

8. Système de revêtement selon l'une des revendications 1 à 7, **caractérisé en ce qu'**on utilise en tant que composant (D) de terminaison de chaîne multifonctionnel des polyols et/ou des polyamines et/ou des amino-alcools aliphatiques ou cycloaliphatiques.

9. Système de revêtement selon la revendication 8, **caractérisé en ce qu'**on utilise en tant que composant de terminaison de chaîne multifonctionnel (D) la diéthanolamine et/ou le diméthylolpropane.

10. Système de revêtement selon l'une des revendications 1 à 9, **caractérisé en ce qu'**on utilise en tant que composant de formulation (F) des antimoussants, des désaérateurs, des additifs de glissement et d'étalement, des additifs durcissant sous l'effet de rayonnements, des additifs dispersants, des additifs de mouillage du substrat, des agents d'hydrophobisation, des additifs de rhéologie ainsi que des épaississants de type polyuréthanne, des auxiliaires de coalescence, des agents de matage, des promoteurs d'adhérence, des agents antigels, des antioxydants, des stabilisants UV, des bactéricides, des fongicides, d'autres polymères et/ou des dispersions de polymères, ainsi que des matières de charge, des pigments, des agents de matage ou une combinaison appropriée de ceux-ci.

11. Système de revêtement selon l'une des revendications 1 à 10, **caractérisé en ce qu'**on utilise en tant que composant de réticulation (H) des polyisocyanates dispersibles dans l'eau, ayant des groupes isocyanate à liaison aliphatique et/ou cycloaliphatique et/ou aromatique, qui contiennent 0 à 20 parties en poids d'un solvant organique.

12. Système de revêtement selon l'une des revendications 1 à 11, **caractérisé en ce que** le rapport entre équivalents NCO/OH des composants (A) et (B) est ajusté à une valeur de 1,25 à 2,5, de préférence de 1,5 à 2,25.

13. Système de revêtement selon l'une des revendications 1 à 12, **caractérisé en ce que** les étapes de réaction a₁) et a₂) sont mises en oeuvre en présence de 0,01 à 1 % en poids, par rapport aux composants (A) et (B), d'un catalyseur usuel pour les réactions de polyaddition sur des polyisocyanates.

14. Système de revêtement selon l'une des revendications 1 à 13, **caractérisé en ce que** le composant de terminaison de chaîne (D) est ajouté en une quantité telle que le degré de terminaison de chaîne soit, par rapport aux groupes isocyanate libres du prépolymère de polyuréthanne des composants (A) et (B), de 80 à 100 % en équivalents.

15. Système de revêtement selon l'une des revendications 1 à 14, **caractérisé en ce que** le composant de neutralisation (E) est ajouté en une quantité telle que le degré de neutralisation, par rapport aux groupes acide carboxylique et/ou acide sulfonique libres de l'oligomère ou du polymère de polyuréthanne des composants (A), (B) et (D), soit de 70 à 100 % en équivalents, de préférence de 80 à 90 % en équivalents.

16. Système de revêtement selon l'une des revendications 1 à 15, **caractérisé en ce que** le composant d'extension de chaîne (G) est ajouté en une quantité telle que le degré d'extension de chaîne, par rapport aux groupes isocyanate libres de l'oligomère ou du polymère de polyuréthanne des composants (A), (B), (D) et (E), soit de 0 à 20 % en équivalents.

17. Système de revêtement selon l'une des revendications 1 à 16, **caractérisé en ce que** la teneur en extrait sec de l'oligomère ou du polymère de polyuréthanne constitué des composants (A), (B), (D), (E) et (G) est ajustée à une valeur de 35 à 70 % en poids, de préférence de 45 à 55 % en poids, par rapport à la quantité totale du composant liant aqueux constitué des composants (A) à (E) et (G).

18. Système de revêtement selon l'une des revendications 1 à 17, **caractérisé en ce que** le granulométrie moyenne des micelles du composant liant aqueux constitué des composants (A) à (E) et (G) est de 10 à 300 nm.

19. Système de revêtement selon l'une des revendications 1 à 18, **caractérisé en ce que** l'oligomère ou le polymère de polyuréthanne constitué des composants (A), (B), (D), (E) et (G) présente une masse moléculaire moyenne de 1000 à 20 000 daltons.

20. Système de revêtement selon l'une des revendications 1 à 19, **caractérisé en ce que** le rapport entre équivalents NCO/(OH+NH(₂₎)des groupes isocyanate du composant de réticulation et des groupes hydroxyle et/ou amino du composant liant est ajusté à une valeur de 1,1 à 1,6, de préférence de 1,2 à 1,4.

21. Procédé de préparation du système de revêtement polyuréthanne bicomposant aqueux selon les revendications 1 à 20, **caractérisé en ce que**, dans l'étape de réaction
a₁), on fait réagir les composants (A) (i), (A) (ii), (B) et (C), éventuellement en présence d'un catalyseur, pour obtenir un pré-adduit de polyuréthanne, les groupes hydroxyle des composants (A) (i) et (A) (ii) étant en totalité ou en partie mis à réagir avec les groupes isocyanate du composant (B),
a₂), on fait réagir le pré-adduit de polyuréthanne de l'étape a₁) avec les composants (A) (iii) et (A) (iv), a₃), on fait réagir le prépolymère de polyuréthanne ayant subi une modification anionique de l'étape a₂) avec le composant (D), en ne faisant réagir dans chaque cas qu'un groupe réactif du composant (D) avec un groupe isocyanate du pré-adduit de polyuréthanne, a₄), on fait réagir avec le composant (E), pour une neutralisation partielle ou totale, l'oligomère ou le polymère de polyuréthanne fonctionnalisé et ayant subi une modification anionique de l'étape a₃), qui comprend deux ou plus groupes réactifs par extrémité de chaîne et une fonctionnalisé totale ≥ 4, puis
a₅), on disperse l'oligomère ou le polymère de polyuréthanne fonctionnalisé et ayant subi une modification anionique de l'étape a₄) dans de l'eau qui éventuellement contient encore le composant (F), a₆), on fait réagir avec le composant (G) éventuellement l'oligomère ou le polymère de polyuréthanne, n'ayant subi que partiellement une terminaison de chaîne, fonctionnalisé et ayant subi une modification anionique, de l'étape a₅), puis b) on fait réagir le composant liant de l'étape a₅) ou de l'étape a₆) avec le composant de réticulation (H) ayant éventuellement subi une modification hydrophile, en ajoutant le composant de réticulation (H) au composant liant, et, après l'application, on obtient un système de revêtement polyuréthanne hautement réticulé.

22. Procédé selon la revendication 21, **caractérisé en ce qu'**on regroupe les étapes a₄) et a₅) de façon à ajouter le composant (E) à l'eau avant l'opération de dispersion.

23. Procédé selon la revendication 21, **caractérisé en ce qu'**on regroupe les étapes a₅) et a₆) de façon à ajouter le composant (G) à l'eau avant l'opération de dispersion.

24. Procédé selon l'une des revendications 21 à 23, **caractérisé en ce qu'**on met en oeuvre les étapes a₁) à a₃) à une température de 60 à 120°C, de préférence de 80 à 100°C.

25. Procédé selon l'une des revendications 21 à 24, **caractérisé en ce qu'**on met en oeuvre l'étape a₄) à une température de 40 à 65°C, de préférence à environ 50°C.

26. Procédé selon l'une des revendications 21 à 25, **caractérisé en ce qu'**on met en oeuvre les étapes a₅) et a₆) à 30 à 50°C, de préférence à environ 40°C.

27. Procédé selon l'une des revendications 21 à 26, **caractérisé en ce qu'**on met en oeuvre l'étape b) à une température de 20 à 40°C, de préférence à environ 20°C.

28. Utilisation du système de revêtement polyuréthanne bicomposant hautement réticulé et aqueux selon l'invention selon les revendications 1 à 20 dans le secteur de la construction ou dans le secteur industriel en tant que systèmes de peintures et/ou de revêtement, formulés ou non formulés, stables aux agents chimiques et solides à la lumière, pour les surfaces de matériaux de construction minéraux tels que par exemple le béton, le plâtre, les céramiques, l'argile, le ciment, ainsi que pour les surfaces de verre, de caoutchouc, de bois et de matériaux à base de bois, de matières plastiques, de métaux, de papier, de matériaux composites, de cuir, ou en tant que liants pour l'amélioration de liants hydrauliques.

29. Utilisation du système de revêtement polyuréthanne bicomposant aqueux non formulé ou formulé selon les revendications 1 à 20, à titre individuel ou en combinaison, pour réaliser un système
α) de revêtements de sol pour intérieurs,
β) de revêtements sur balcons, ou
γ) de revêtements de niveaux de parking et de parkings à plusieurs étages.
